# EUROPEAN PATENT APPLICATION

(11) **EP 4 818 470 A1**
(43) Date of publication of application: **07.10.2026**
(21) Application number: 26170933.1
(22) Date of filing: 07.04.2026
(51) Int. Cl.: F01D 5/18

(54) **TURBINE ENGINE COMPONENT WITH A COOLING APERTURE**

(30) Priority: 04.04.2025 US 202563783311 P
(71) Applicant: General Electric Company, Cincinnati, Ohio 45215 (US)
(72) Inventor: BEYER, Matthew Thomas, West Chester, 45069 (US); PANG, Tingfan, West Chester, 45069 (US); DURSTOCK, Daniel Lee, West Chester, 45069 (US); KRUMANAKER, Matthew Lee, West Chester, 45069 (US); OSGOOD, Daniel Endecott, West Chester, 45069 (US); WEBSTER, Zachary Daniel, West Chester, 45069 (US); OSUSKY, Michal, Niskayuna, 12309 (US); QUINTERO BADILLO, Jorge Rodrigo, West Chester, 45069 (US)
(74) Representative: Openshaw & Co.

(57) **Abstract**

A turbine blade assembly (100) for a gas turbine engine (10) can include a cooling aperture (150) for local thermal heat management and to provide a cooling film along an exterior surface (134) of an airfoil (104) of the turbine blade assembly (100). The cooling aperture (150) is positioned within an outer wall (118) defining an interior (130) for the airfoil (104) and a cooling circuit (132) provides a cooling fluid flow to the cooling aperture (150). The cooling aperture (150) is at least partially defined by an outer surface (160), an inner surface (162), a first side (164), a second side (166), and a flared portion (170). The cooling aperture (150) exhausts at a diffuser outlet (156) extending between the first side (164) and the second side (166).

## Description

### RELATED APPLICATION

This patent claims the benefit of U.S. Provisional Patent Application No. 63/783,311, titled "TURBINE ENGINE COMPONENT WITH A COOLING APERTURE," which was filed on April 4, 2025. U.S. Provisional Patent Application No. 63/783,311 is incorporated herein by reference in its entirety. Priority to U.S. Provisional Patent Application No. 63/783,311 is hereby claimed.

### TECHNICAL FIELD

The present subject matter relates generally to a turbine engine component, such as an airfoil of a turbine blade assembly, having a cooling aperture for cooling the turbine engine component.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine, in accordance with an exemplary embodiment of the present disclosure.
FIG. 2 is a perspective partially cut view of an engine component in the form of a turbine blade assembly having an airfoil with a cooling aperture, in accordance with an exemplary embodiment of the present disclosure.
FIG. 3 is a perspective view of the cooling aperture of FIG. 2 removed from the engine component and represented as a solid body, having a flared portion in a downstream direction along sides of the cooling aperture, in accordance with an exemplary embodiment of the present disclosure.
FIG. 4 is a rear view of the cooling aperture of FIG. 3 illustrating the flared portion within an impingement portion of the cooling aperture, in accordance with an exemplary embodiment of the present disclosure.
FIG. 5 is a front view of the cooling aperture of FIG. 3 illustrating the flared portion within a diffusion portion and at a diffuser outlet for the cooling aperture, in accordance with an exemplary embodiment of the present disclosure.
FIG. 6 is a top view of the cooling aperture of FIG. 3 illustrating an expanding shape of cooling aperture, in accordance with an exemplary embodiment of the present disclosure.
FIG. 7 is a side view of the cooling aperture of FIG. 3 illustrating an angle between the impingement portion and the diffusion portion of the cooling aperture, in accordance with an exemplary embodiment of the present disclosure.
FIG. 8 is an enlarged view of a portion of the cooling aperture of FIG. 3 illustrating a flare thickness and a flare width for the flared portion, in accordance with an exemplary embodiment of the present disclosure.
FIG. 9 is a perspective view of a cooling aperture, represented as a solid body, having a flared portion in an upstream direction along sides of the cooling aperture, in accordance with an exemplary embodiment of the present disclosure.
FIG. 10 is a top view of the cooling aperture of FIG. 9 illustrating the flared portion in the upstream direction at a diffuser outlet of the cooling aperture, in accordance with an exemplary embodiment of the present disclosure.
FIG. 11 is a perspective view of a cooling aperture represented as a solid body, with a flared portion in both an upstream direction and a downstream direction along sides of the cooling aperture, in accordance with an exemplary embodiment of the present disclosure.
FIG. 12 is a top view of the cooling aperture of FIG. 11 illustrating the flared portion at a diffuser outlet in both the upstream direction and the downstream direction, in accordance with an exemplary embodiment of the present disclosure.
FIG. 13 is a perspective view of a cooling aperture, represented as a solid body, having turbulators provided in a flared portion extending in a downstream direction along sides of the cooling aperture, in accordance with an exemplary embodiment of the present disclosure.
FIG. 14 is a side view of the cooling aperture of FIG. 13 illustrating a shape of the turbulators within the flared portion, in accordance with an exemplary embodiment of the present disclosure.
FIG. 15 is a perspective view of a cooling aperture, represented as a solid body, having a flared portion in an upstream direction with a diffusion portion overlaying an upstream impingement portion, in accordance with an exemplary embodiment of the present disclosure.
FIG. 16 is a perspective view of a cooling aperture, represented as a solid body, having a flared portion in both an upstream direction and a downstream direction and including a diffusion portion overlaying an impingement portion, in accordance with an exemplary embodiment of the present disclosure.
FIG. 17 is a perspective view of a cooling aperture, represented as a solid body, having a flared portion in a downstream direction, and including a diffusion portion overlaying an impingement portion, in accordance with an exemplary embodiment of the present disclosure.
FIG. 18 is a perspective view of a cooling aperture having no flared portions and including a diffusion portion overlaying an impingement portion, as well as showing a potential discrete flared portion in broke line, in accordance with an exemplary embodiment of the present disclosure.
FIG. 19 is a top view of a cooling aperture, having a flared portion that extends in the upstream direction, with an impingement portion and a diffusion portion that expand at an angle in a direction toward a diffuser outlet, in accordance with an exemplary embodiment of the present disclosure.
FIG. 20 is a top view of a cooling aperture with an impingement portion that widens in a direction toward a diffuser outlet and a diffusion portion having a constant width extending toward the diffuser outlet, in accordance with an exemplary embodiment of the present disclosure.
FIG. 21 is a top view of a cooling aperture with a flared portion at only one side of the cooling aperture, in accordance with an exemplary embodiment of the present disclosure.
FIG. 22 is an enlarged view of a portion of a cooling aperture having a flared portion in the downstream direction having a coating positioned within a diffuser outlet, in accordance with an exemplary embodiment of the present disclosure.
FIG. 23 is a top view of a cooling aperture with a centerbody that separates an impingement portion into two diffusion portions having a flared portion in the downstream direction, in accordance with an exemplary embodiment of the present disclosure.
FIG. 24 is a top view of a set of cooling apertures having a staggered arrangement, in accordance with an exemplary embodiment of the present disclosure.
FIG. 25 is a top view of a set of cooling apertures arranged into rows having a staggered arrangement, in accordance with an exemplary embodiment of the present disclosure.
FIG. 26 is a top view of a row of cooling apertures having an increasing spacing in a first direction, in accordance with an exemplary embodiment of the present disclosure.
FIG. 27 is a graph of data points from example cooling hole aperture designs.

### DETAILED DESCRIPTION

During operation of the gas turbine engine various systems may generate a relatively large amount of heat. For example, a substantial amount of heat may be generated during operation of the thrust generating systems, lubrication systems, electric motors and/or generators, hydraulic systems, or other systems. Accordingly, a cooling structure within the engine components located in the various systems would be advantageous in the art.

Aspects of the disclosure herein are directed to a cooling aperture located within an engine component, such as an airfoil, and more specifically to a cooling aperture designed for reducing local stresses where the performance of the cooling aperture is a function of geometry parameters that drive heat transfer, cooling film generation, and pressure drop resultant of a cooling fluid passed through the cooling aperture. For purposes of illustration, the present disclosure will be described with respect to the cooling aperture located within an airfoil of a turbine for a gas turbine engine, such as a turbine blade provided within a turbine section of the gas turbine engine. It will be understood, however, that aspects of the disclosure herein are not so limited and may have general applicability within an engine, including compressors or fans, as well as in non-aircraft applications or other turbine environments, such as other mobile applications and non-mobile industrial, commercial, and residential applications. Non-limiting examples of alternate components for a turbine engine that could utilize such a cooling aperture includes a shroud, blade, strut, service tube, vane, nozzle, airfoil, or combustor liner.

Reference will now be made in detail to the architecture, and in particular the cooling aperture, located within a turbine blade, one or more examples of which are illustrated in the accompanying drawings. The detailed description uses numerical and letter designations to refer to features in the drawings.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," and "fourth" may be used interchangeably to distinguish one component from another and are not intended to signify location or importance of the individual components.

The terms "forward" and "aft" refer to relative positions within a gas turbine engine or vehicle, and are based on a normal operational attitude of the gas turbine engine or vehicle. More particularly, forward and aft are used herein with reference to a direction of travel and a direction of propulsive thrust of the gas turbine engine or vehicle.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluid communication" means that a fluid is capable of making the connection between the areas specified.

Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain exemplary embodiments of the present disclosure, a gas turbine engine defining a centerline and a circumferential direction is provided. The gas turbine engine may generally include a turbomachine and a rotor assembly. The rotor assembly may be driven by the turbomachine. The turbomachine, the rotor assembly, or both may define a substantially annular flow path relative to the centerline of the gas turbine engine. The gas turbine engine includes an airfoil, by way of non-limiting example a turbine blade positioned within the flow path, with at least one cooling aperture provided within. The airfoil described herein can be among a plurality of airfoils provided circumferentially about the centerline or be partially provided about a portion of the centerline.

The at least one cooling aperture design for the airfoil or component can be designed for various flight conditions, including take off, descent, idle, and cruise. The objective, when designing an airfoil, can be generally stated as satisfying a minimum heat transfer capability or minimum cooling film capability within an acceptable amount of pressure across the airfoil. Key factors to consider include the available fluid volume and associated geometrical constraints for the at least one cooling aperture design and the operational limits of the engine component. In addition, the cooling apertures represent discontinuities in areas in which they are located and are therefore designed to minimize stress concentrations to maintain the structural integrity of the component.

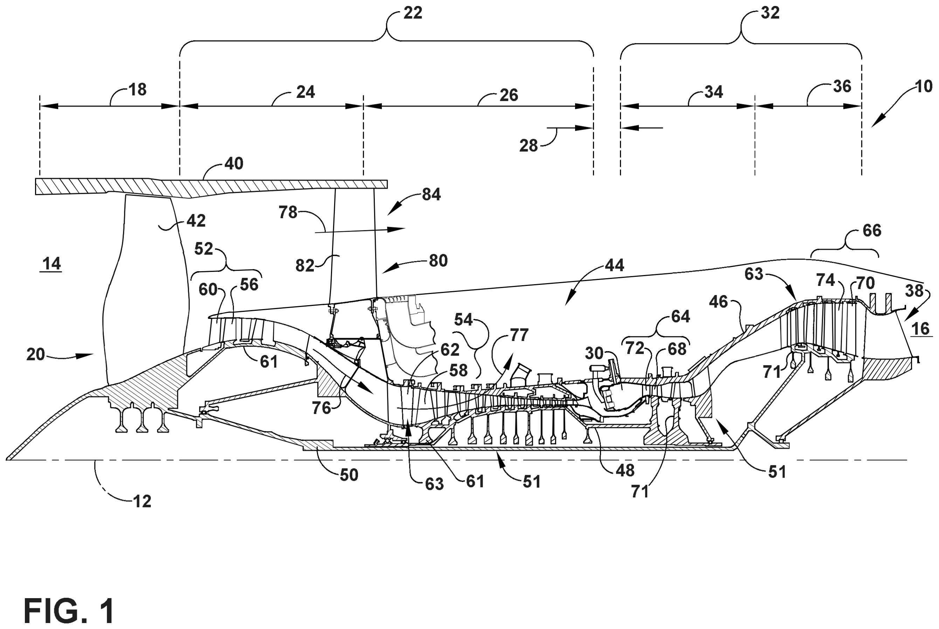

FIG. 1 is a schematic cross-sectional diagram of a gas turbine engine 10 for an aircraft. The gas turbine engine 10 has a generally longitudinally extending axis or centerline 12 extending from a forward 14 to an aft 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the gas turbine engine 10, which generates combustion gases. The core 44 is surrounded by a core casing 46, which can be coupled with the fan casing 40.

An HP shaft or spool 48 disposed coaxially about the centerline 12 of the gas turbine engine 10 drivingly connects the HP turbine 34 to the HP compressor 26. An LP shaft or spool 50 is disposed coaxially about the centerline 12 and positioned within the larger diameter annular HP spool 48. The LP shaft or spool 50 drivingly connects the LP turbine 36 to the LP compressor 24 and fan 20. The HP and LP spools 48, 50 are rotatable about the centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating compressor blades 56, 58. It is noted that the number of stages, blades, vanes, and compressor stages shown in FIG. 1 were selected for illustrative purposes only, and that other numbers are possible.

The compressor blades 56, 58 for a stage of the compressor can be mounted to a disk 61, which is mounted to the corresponding one of the HP and LP spools 48, 50, with each stage having its own disk 61. In an alternative, non-limiting example, the compressor blades 56, 58 may be part of a blisk, rather than being mounted to a disk. The compressor vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in an annular ring and can extend radially outwardly relative to the centerline 12, from a blade platform to a blade tip, while the corresponding static turbine vanes 72, 74 are positioned upstream of and adjacent to the rotating turbine blades 68, 70. It is noted that the number of stages, blades, vanes, and turbine stages shown in FIG. 1 were selected for illustrative purposes only, and that other numbers are possible.

The turbine blades 68, 70 for a stage of the turbine can be mounted to a disk 71, which is mounted to the corresponding one of the HP and LP spools 48, 50, with each stage having a dedicated disk 71. The turbine vanes 72, 74 for a stage of the turbine can be mounted to the core casing 46 in a circumferential arrangement.

Complimentary to the rotor 51, the stationary portions of the gas turbine engine 10, such as the static compressor and turbine vanes 60, 62, 72, 74 among the compressor and turbine sections 22, 32 are also referred to individually or collectively as a stator 63. As such, the stator 63 can refer to the combination of non-rotating elements throughout the gas turbine engine 10.

In operation, the airflow exiting the fan section 18 is split such that a portion of the airflow is channeled into the LP compressor 24 as a pressurized air 76, while a remaining portion of the airflow bypasses the core 44 as bypass airflow 78. The pressurized air 76 passes to the HP compressor 26, which further pressurizes the air. The pressurized air 76 from the HP compressor 26 is mixed with fuel in the combustor 30 and ignited, generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the gas turbine engine 10 via the exhaust section 38. The driving of the LP turbine 36 drives the LP spool 50 to rotate the fan 20 and the LP compressor 24.

A portion of the pressurized air 76 can be drawn from the compressor section 22 as a bleed airflow 77. The bleed airflow 77 can be drawn from the pressurized air 76 and provided to engine components requiring cooling. The temperature of pressurized air 76 entering and exiting the combustor 30 is significantly increased. As such, cooling provided by the bleed airflow 77 is supplied to downstream turbine components (e.g., the turbine blade 68) subjected to the heightened temperature environments.

The bypass airflow 78 bypasses the LP compressor 24 and core 44 and exits the gas turbine engine 10 through a stationary vane row. The stationary vane row can be an outlet guide vane assembly 80 comprising a plurality of airfoil guide vanes 82 at a fan exhaust side 84. More specifically, a circumferential row of radially extending airfoil guide vanes 82 are utilized adjacent to the fan section 18 to exert some directional control of the bypass airflow 78.

Some of the air supplied by the fan 20 can bypass the core 44 and be used for cooling of portions, especially hot portions, of the gas turbine engine 10, and/or used to cool or power other aspects of the aircraft upon which the gas turbine engine 10 is mounted. Hot portions can be those portions heated by combustion in the combustor 30, for example, like the combustor 30 or the HP turbine 34, the air supplied by the fan 20 is relatively cooler than the hot portions. In the context of the gas turbine engine 10, the hot portions of the engine are normally downstream of the combustor 30, especially the turbine section 32, with the HP turbine 34 being the hottest portion as it is directly downstream of the combustion section 28. Other sources of cooling fluid can be, but are not limited to, the bleed airflow 77 from the LP compressor 24 or the HP compressor 26.

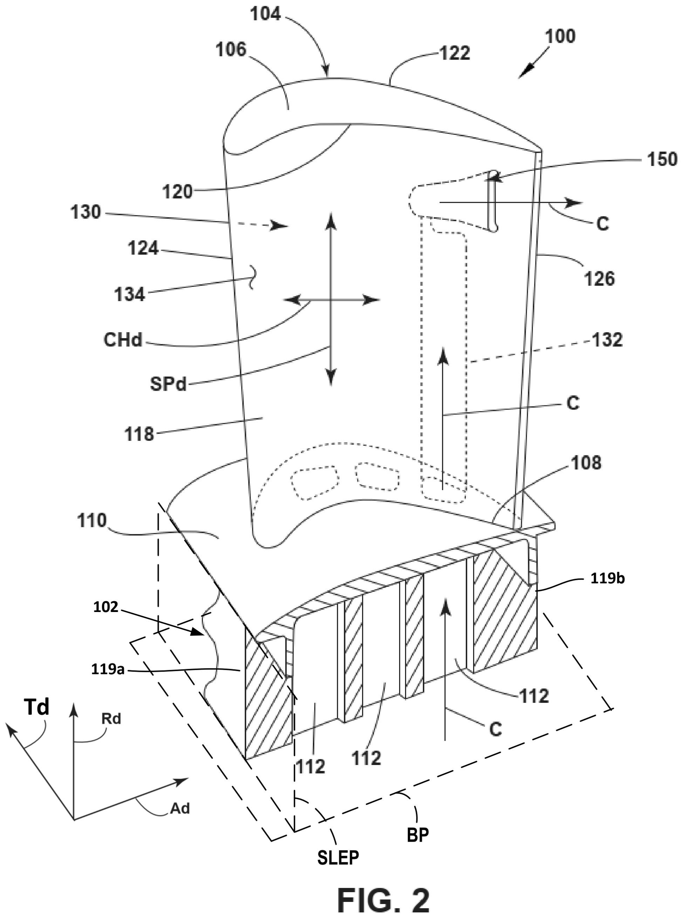

FIG. 2 is a perspective view of an engine component in the form of a turbine blade assembly 100, such as the turbine blade 68, 70 of the gas turbine engine 10 from FIG. 1.

The turbine blade assembly 100 includes a shank 102 and an airfoil 104. The airfoil 104 extends between a tip 106 and a root 108 to define a span-wise direction (SPd) extending therebetween. The airfoil 104 mounts to the shank 102 at a platform 110 at the root 108. The shank 102 and the platform 110 are partially cross-sectioned in FIG. 2. When multiple airfoils are circumferentially arranged in side-by-side relationship, the platform 110 helps to radially contain the gas turbine engine mainstream airflow and forms the radially inner wall of an annulus through which the air flows. The shank 102 can be configured to mount to the turbine rotor disk 71 on the gas turbine engine 10 of FIG. 1, in a non-limiting example. In the illustrated example, the shank 102 has a dovetail shape, which is shaped to be inserted into a corresponding slot in the disk 71. The shank 102 is oriented to mount to the turbine rotor disk 71 along an axial direction (Ad). The shank 102 further includes at least one inlet passage, shown as three exemplary inlet passages 112, extending through the shank 102 to provide internal fluid communication with the airfoil 104.

For the sake of reference, a set of relative reference directions, along with a coordinate system, can be applied to the turbine blade assembly 100. The shank 102 extends between a base 117 and the platform 110. The base 117 of the shank 102 is a flat surface that defines a plane, referred to herein as the base plane (denoted "BP"). A radial direction (denoted "Rd") of the turbine blade assembly 100 is a direction that is perpendicular to the base plane BP. Further, the shank 102 extends between a shank leading edge 119a and a shank trailing edge 119b. The shank leading edge 119a is a flat surface that defines a plane, referred herein as the shank leading edge plane (denoted "SLEP"). An axial direction (denoted "Ad") of the turbine blade assembly 100 is a direction that is perpendicular to the shank leading edge plane SLEP. A tangential direction (denoted "Td") is a direction perpendicular to both the radial direction Rd and the axial direction Ad.

The airfoil 104 includes an outer wall 118 with a concave-shaped pressure side 120 and a convex-shaped suction side 122, which collectively define an airfoil cross-sectional shape. The airfoil 104 extends between a leading edge 124 and a trailing edge 126 to define a chord-wise direction (CHd) therebetween.

The outer wall 118 has an exterior surface 134 and an interior surface. The interior surface defines or surrounds an interior 130. The interior 130 of the airfoil 104 can include at least one cooling circuit 132, illustrated in broken line. The at least one cooling circuit 132 can fluidly couple to one or more of the inlet passages 112 to provide a cooling fluid flow (C) to the interior 130. A cooling aperture 150 is provided on the outer wall 118 and can be located at any portion of the outer wall 118. The cooling fluid flow (C) can be supplied from the at least one cooling circuit 132 to the cooling aperture 150, cooling the airfoil 104 via heat transfer. The cooling fluid flow (C) exhausts from the cooling aperture 150, spreading along an exterior surface 134 of the outer wall 118, such as exhausting as a cooling film in a non-limiting example.

Materials used to form the airfoil 104, a substrate, or the cooling aperture 150, as well as the turbine blade assembly 100 or portions thereof, can include, but are not limited to, steel, refractory metals such as titanium, or superalloys based on nickel, cobalt, or iron, and ceramic matrix composites. The substrate and cooling architecture can be formed by a variety of methods, including additive manufacturing, casting, electroforming, or direct metal laser melting, in non-limiting examples. As used herein, an "additively manufactured" component will refer to a component formed by an additive manufacturing (AM) process, wherein the component is built layer-by-layer by successive deposition of material. AM is an appropriate name to describe the technologies that build 3D objects by adding layer-upon-layer of material, whether the material is plastic, ceramic, or metal. AM technologies can utilize a computer, 3D modeling software (Computer Aided Design or CAD), machine equipment, and layering material. Once a CAD model is produced, the AM equipment can read in data from the CAD file and lay down or add successive layers of liquid, powder, sheet material or other material, in a layer-upon-layer fashion to fabricate a 3D object representative of the CAD model. It should be understood that the term "additive manufacturing" encompasses many technologies including subsets like 3D Printing, Rapid Prototyping (RP), Direct Digital Manufacturing (DDM), layered manufacturing and additive fabrication. Non-limiting examples of additive manufacturing that can be utilized to form an additively-manufactured component include powder bed fusion, vat photopolymerization, binder jetting, material extrusion, directed energy deposition, material jetting, or sheet lamination. It is also contemplated that a process utilized could include printing a negative of the part, either by a refractory metal, ceramic, or printing a plastic, and then using that negative to cast the component.

In a non-limiting example, the aspects described herein can be formed via an advanced investment casting process. In another non-limiting example, the cooling aperture 150 as described herein can be formed via a ceramic core and shell mold, and investment cast the airfoil 104, component, or portion thereof about the core and shell mold. In another non-limiting example, the cooling aperture 150 as described herein can be formed via a refractory metal core, investment casting the airfoil 104 about the refractory metal core, and then machining remaining portions of the cooling aperture 150 at the metal core. In still another non-limiting example, the cooling aperture 150 as described herein can be formed with a ceramic core and shell mold, investment casting the airfoil 104 about the ceramic core and shell mold, and then machining the flared portion(s) into the casting.

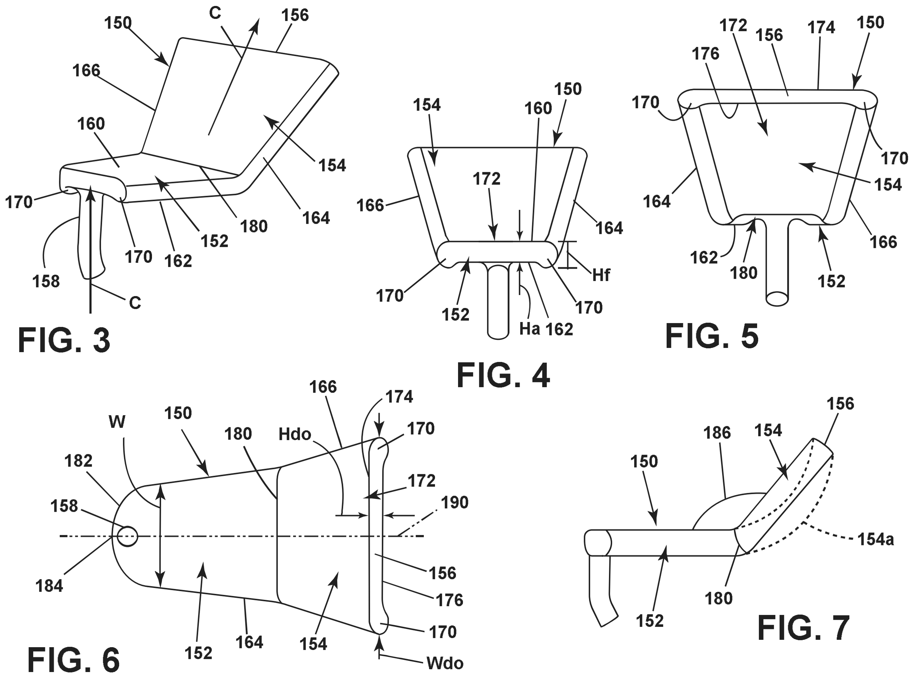

FIGS. 3 - 26 show various aspects for a cooling aperture. It should be appreciated that the cooling aperture as shown in FIGS. 3-25 is in the form of a solid body, while it should be understood that the cooling apertures as described herein will be formed as an aperture or cavity within a substrate, like the outer wall 118 of FIG. 2, and is shown as a solid body to facilitate appreciation and understanding of the three-dimensional shape of the cooling aperture.

Referring to FIG. 3 the cooling aperture 150 includes an impingement portion 152 and a diffusion portion 154 meeting at a junction 180. The metering hole 158 extends through a portion of the outer wall 118 (FIG. 2) and connects to the interior surface of the outer wall 118. As such, the metering hole 158 fluidly couples to the impingement portion 152 to supply the cooling fluid flow (C) from the at least one cooling circuit 132 (FIG. 2). The impingement portion 152 transitions to the diffusion portion 154 at the junction 180, and the diffusion portion 154 exhausts through a diffuser outlet 156. The diffuser outlet 156 is the opening formed in the exterior surface 134 (FIG. 2) of the outer wall 118. The cooling aperture 150 includes an outer surface 160 spaced from an inner surface 162, both spanning the impingement portion 152 and the diffusion portion 154, with the outer surface 160 nearer to an exterior surface (such as the exterior surface 134 of the outer wall 118 of FIG. 2) than the inner surface 162. The cooling aperture 150 extends between a first side 164 and a second side 166 partially defining both the impingement portion 152 and the diffusion portion 154, with the first and second sides 164, 166 terminating at the diffuser outlet 156. A flared portion 170 is provided at the first side 164 and the second side 166 and can partially define the impingement portion 152 and the diffusion portion 154. The flared portion 170 provides an increased or flared edge radius along the first side 164 and the second side 166. As disclosed in further detail herein, this reduces (e.g., minimizes) stresses in the outer wall 118, as well as improves film cooling efficiency.

In operation, a cooling flow (C) is provided to the cooling aperture 150 from the metering hole 158. The cooling fluid flow (C) impinges upon the outer surface 160 from the metering hole 158 and passes from the impingement portion 152 to the diffusion portion 154, where the cooling fluid flow (C) exhausts from the diffusion portion 154 at the diffuser outlet 156. The cooling fluid flow (C) passes to the flared portion 170 along each of the first and second sides 164, 166 within the impingement portion 152 and the diffusion portion 154, also exhausting at the diffuser outlet 156.

Referring to FIG. 4, the first side 164 and the second side 166 each include the flared portion 170, defining an intermediate region 172 between the flared portions 170 for both the impingement portion 152 and the diffusion portion 154. The flared portions 170 can have a circular or curved geometry, having a cross-sectional shape that defines at least 50% of a circle, and having rounded or curved transitions between the flared portions 170 and the intermediate region 172 at the outer and inner surfaces 160, 162. In alternative, non-limiting examples, any cross-sectional shape or geometry for the flared portions 170 is contemplated, including but not limited to circular, cylindrical, conic, rounded, squared, rectangular, curved, linear, or combinations thereof.

An aperture height (Ha) for the cooling aperture 150 is defined as the distance between the outer surface 160 and the inner surface 162 along the intermediation region 172, and is measured perpendicular to the outer surface 160 or the inner surface 162, for example. In some examples, the aperture height (Ha) is 0.005 to 0.05 inches (0.127 to 1.27 millimeters (mm)). A flare height (Hf) for the flared portion 170 is defined as the distance between the outer surface 160 and the inner surface 162 at the flared portions 170, and is measured in a direction perpendicular to the outer surface 160 or the inner surface 162. In an alternative, non-limiting example, the flare height (Hf) can be defined as the greatest distance between the outer surface 160 and the inner surface 162 within the flared portions 170 defined perpendicular to one or both of the outer and inner surfaces 160, 162. In some examples, the flare height (Hf) is 0.015 to 0.100 inches (0.381 to 2.54 millimeters (mm)). As can be appreciated, the flared portions 170 are formed extending into the inner surface 162, such that the inner surface 162 is non-planar amongst the flared portion 170 and the intermediate region 172, while having a non-flared or planar outer surface 160. Alternative examples are contemplated where the non-flared surface is non-planar, while still defining flared portions 170 between an intermediate region 172 on an opposing surface.

Referring to FIG. 5, the flared portions 170 extend from the inner surface 162 within the impingement portion 152 to the inner surface 162 within the diffusion portion 154 through the junction 180. The diffuser outlet 156 includes an upstream edge 174 spaced from a downstream edge 176 and extends between the first side 164 and the second side 166. The flared portions 170 extend from the inner surface 162 of the diffusion portion 154 and terminate at the downstream edge 176 of the diffuser outlet 156.

Referring to FIG. 6, the impingement portion 152 includes a rounded end 182 transitioning between the first side 164 and the second side 166. A center 184 of the rounded end 182 can be defined as located centrally or equidistant from the first side 164 and the second side 166. In a non-limiting example, the rounded end 182 can have a circular shape, with a constant radius of curvature, while additional geometries are contemplated, such as rounded, circular, elliptical, oval, rounded with non-constant radii, linear, or combinations thereof in additional non-limiting examples.

An axis 190 can be defined extending from the center 184 to the diffuser outlet 156 equidistant from each of the first side 164 and the second side 166. A width (W) for the cooling aperture 150 can be defined as the distance between the first side 164 and the second side 166 and can be defined perpendicular to the axis 190. A diffuser outlet width (Wdo) is defined as the width (W) at the diffuser outlet 156. The width (W) for the impingement portion 152 can increase in a direction extending from the rounded end 182 toward the junction 180, and the width (W) for the diffusion portion 154 can increase in a direction extending from the junction 180 to the diffuser outlet 156, having a maximum width (W) as the diffuser outlet width (Wdo) at the diffuser outlet 156. Such an increase in width (W) can define an increasing cross-sectional area for the cooling aperture 150 in a direction toward the diffuser outlet 156, while it is contemplated the aperture height (Ha) and the flare height (Hf) for the flared portions 170 and the intermediate region 172 remains constant (see FIG. 4). In a non-limiting example, the rate of increase for the width (W) for the impingement portion 152, the diffusion portion 154, or both, can be constant, and the rate of increase for the width (W) can be the same among the impingement portion 152 and the diffusion portion 154. In additional non-limiting examples, the rate at which the width (W) increases can be non-constant, or variable, or can be different among the impingement portion 152 and the diffusion portion 154. In another non-limiting example, the rate of change for the width (W) can be different among the first side 164 and the second side 166, or even among the first and second sides 164, 166 within either of the impingement portion 152 or the diffusion portion 154.

A diffuser outlet height (Hdo) is defined as a height for the diffuser outlet 156 measured as the distance between the upstream edge 174 and the downstream edge 176 within the intermediate region 172, and can be measured perpendicular to one or both of the upstream edge 174 or the downstream edge 176, in a non-limiting example. In another non-limiting example, the aperture height (Ha) (FIG. 4) can be the same as the diffuser outlet height (Hdo). In some examples, a ratio of the diffuser outlet width (Wdo) of the cooling aperture 150 to the diffuser outlet height (Hdo) is greater than two, but other ratios or sizes for the diffuser outlet width (Wdo) and the diffuser outlet height (Hdo) can be implemented. In additional non-limiting examples, the ratio of the diffuser outlet width (Wdo) to the diffuser outlet height (Hdo) can be greater than three or can be greater than six. These example ranges maintain a desired balance of cooling performance and stress management. In a non-limiting example, the diffuser outlet width (Wdo) can be greater than 0.050 inches (in) (1.27 millimeters (mm)). In another non-limiting example, the diffuser outlet height (Hdo) is greater than or equal to 0.005 in (0.127 mm) and less than or equal to 0.050 in (1.27 mm).

In another non-limiting example, a ratio of the diffuser outlet width (Wdo) to a hydraulic diameter (*dₕ*) of the metering hole 158 is greater than three, which maintains a desired balance of cooling performance and stress management. The hydraulic diameter (*dₕ*) for the metering hole 158 is defined as ${d}_{h} = \frac{4 a}{p}$ where "*a*" is the cross-sectional area of the flow and *"p"* is the wetted perimeter of the cross-section. Where a cooling aperture utilizes more than one metering hole, the "hydraulic diameter" (*dₕ*) of the cooling aperture 150 is an average of the hydraulic diameters among the more than one metering hole. In yet another non-limiting example, a ratio of the diffuser outlet height (Hdo) to the hydraulic diameter (*dₕ*) for the metering hole 158 is less than three, which maintains a desired balance of cooling performance and stress management.

Referring to FIG. 7, the impingement portion 152 is positioned at an angle 186 relative to the diffusion portion 154, with the junction 180 providing a curved or rounded transition therebetween. In one example, the angle 186 can be greater than or equal to 90 degrees (90°) and less than 180 degrees (180°). In another non-limiting example, the diffusion portion 154 can be curved. As shown in broken line, a curved diffusion portion 154a can curve from the impingement portion 152 to the diffuser outlet 156. While the curved diffusion portion 154a curves in a direction toward the diffuser outlet 156, any curved orientation in any direction is contemplated, or in combination with curved portions and linear portions.

It should be further appreciated that flared portions 170 need not extend fully along the first and second sides 164, 166, and discrete flared portions 170 are contemplated, such as those extending only partially between the rounded end 182 (FIG. 6) and the diffuser outlet 156, or that two or more discrete or different flared portions 170 are defined within a single cooling aperture or at a single side for the cooling aperture 150. Such discrete or different flared portions can be similar or different, such as having similar or different lengths, widths, sizes, geometries, positions, or combinations thereof in non-limiting examples. The application of discrete or different flared portions 170 within a single cooling aperture can be utilized to tailor local heat transfer, film cooling, or stress mitigation needs to the particular component in which the cooling aperture is positioned. For example, where local stresses are increased at the diffuser outlet 156 for the cooling aperture 150, the use of the flared portions 170 at discrete locations can mitigate such stress at those locations, such as at the diffuser outlet 156, while the absence of flared portions 170 within the impingement portion 152 or the diffusion portion 154 can be used to control flow rates or volumes within the cooling aperture 150 prior to exhausting at the diffuser outlet 156. As can be appreciated, the particular implementation of the cooling aperture 150 can define the particular arrangements, positions, or sizes of the flared portions 170.

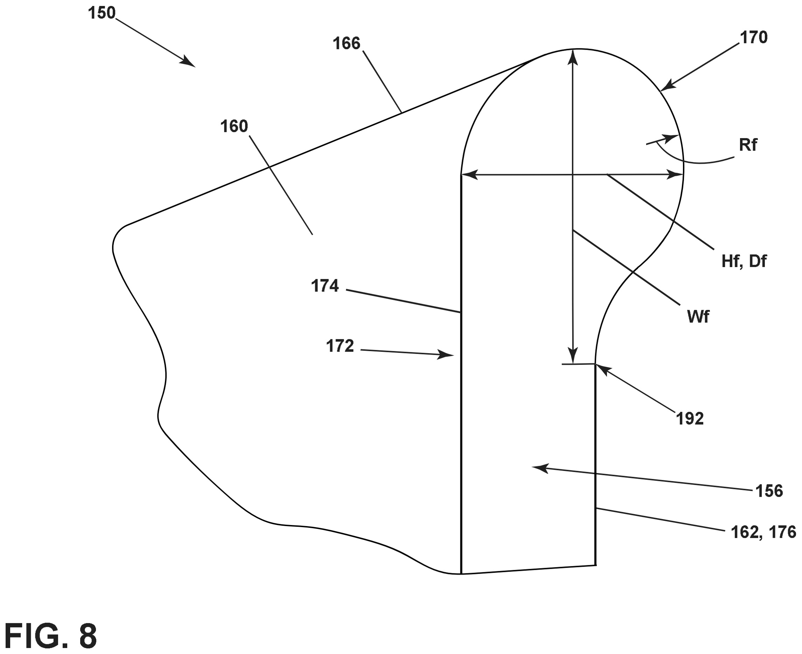

FIG. 8 illustrates an enlarged view of the flared portion 170 at the diffuser outlet 156 at the second side 166. The flared portion 170 defines the flare height (Hf) as the greatest distance between the outer surface 160 and the inner surface 162 within the flared portion 170. In a non-limiting example, the flare height (Hf) can be measured in a direction perpendicular to that of the outer surface 160 or the inner surface 162. The flare shape for the flared portion 170 can be defined by its local radius of curvature (Rf) which can be constant, variable, or continuously variable. In a non-limiting example, where the flared portion 170 defines at least a portion of a circle, it is contemplated that the flared portion 170 can define a flare diameter (Df), being defined as the diameter of the circle-shape at the first side 166 at the outlet 156 and at least partially defining the flared portion 170 between the upstream edge 174 and the downstream edge 176. The flare diameter (Df) can be equal to the flare height (Hf), for example. Where the flared portion 170 varies from circular, the flared portion 170 can include multiple radii, diameters, or variable radii of curvature. In such an example, the flare diameter (Df) can be the largest diameter among the multiple or variable radii of curvature for the flared portion 170. In another non-limiting example, such a variable radius of curvature (Rf) can be defined along the downstream edge 176 of the diffuser outlet 156, or along any surface of the cooling aperture 150 into which the flared portion 170 extends.

A flare width (Wf) is defined as the width of the flare extending in a direction between the first side 164 and where the flared portion 170 terminates at the intermediate region 172. In non-limiting examples, the flare width (Wf) can be defined extending in a direction between the first side 164 and the second side 166 (see FIG. 6), can be defined extending perpendicular to the axis 190 (FIG. 6), can be defined in a direction perpendicular to the flare height (Hf), or can be defined in a direction parallel to the width (W), the diffuser outlet width (Wdo), or both of FIG. 6. In a non-limiting example where the intermediate region 172 can be defined by a parallel arrangement between the outer surface 160 and the inner surface 162, the flared portion 170 can begin where the curvature of the flared portion 170 varies either or both of the outer surface 160 or the inner surface 162 such that the two are no longer parallel. In FIG. 8 as shown, the transition is at the inner surface 162, where the curvature for the flared portion 170 begins at a location 192 on the downstream edge 176, and the parallel arrangement between the outer surface 160 and the inner surface 162 ceases.

In a non-limiting example, a ratio of the flare diameter (Df) to the diffuser outlet height (Hdo) (FIG. 6) is greater than 0.75. In another non-limiting example, the flare height (Hf) can be less than 0.030 in (0.762 mm). In another non-limiting example, a ratio of the flare height (Hf) to the aperture height (Ha) is greater than 1.5. These example ranges maintain a desired balance of cooling performance and stress management.

The cooling aperture 150 as discussed herein provides for improvements in heat transfer cooling and cooling film generation, while mitigating stresses at the diffuser outlet 156. The flared portions 170 provide for reducing local stresses along the cooling aperture 150, at the diffuser outlet 156, and along the first and second sides 164, 166. A traditional cooling hole without similar flared portions suffers from local high-stress concentrations at the exhaust outlet, particularly at the sides, and is exacerbated when multiple cooling holes are arranged having outlets near to or aligned with one another. Utilizing the flared portions 170 distributes these stresses over a greater area, decreasing or eliminating such high-stress concentrations, and increasing component lifetime and reducing maintenance. Similarly, placement of the cooling aperture 150 within the particular component (like the airfoil 104 of FIG. 2) can be nearer to other cooling apertures 150 as a result of the reduction in stress. Such a closer placement can be utilized to reduce gaps or thin spots in film cooling along the exterior surface 134 (FIG. 2) of the component, as well as permitting closer arrangements of the cooling apertures 150, which can improve overall heat transfer capability within the component, otherwise unachievable with aggregate stresses among cooling holes without the flared portions 170. Therefore, overall heat transfer and film cooling can be improved. Further still, the relatively larger area for the first and second sides 164, 166 resultant of the flared portions 170 can increase the volume of the cooling fluid flow (C) (FIG. 3) emitted from the diffuser outlet 156, particularly at the first and second sides 164, 166, which can be otherwise challenging to achieve suitable local heat transfer or film cooling coverage along sides or edges of the cooling holes.

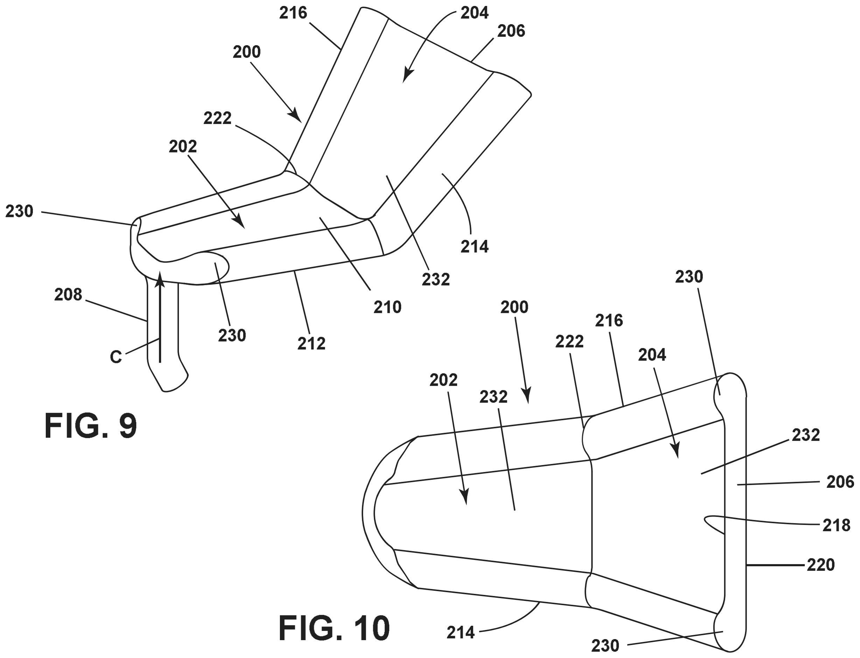

In the example cooling aperture 150 of FIGS. 3-8, the flared portions 170 are on the inner surface 162 (e.g., on the downstream edge of the diffuser outlet 156). In other examples, the flared portions can be on the outer surface 160 (e.g., on the upstream edge of the diffuser outlet 156). For example, FIGS. 9-10 illustrate another example cooling aperture 200 that can be implemented on the airfoil 104 of the turbine blade assembly 100 (FIG. 2). The cooling aperture 200 includes an impingement portion 202 and a diffusion portion 204 meeting at a junction 222, and exhausts at a diffuser outlet 206. A metering hole 208 couples to the impingement portion 202 to supply a cooling fluid flow (C) from a supply, such as the at least one cooling circuit 132 (FIG. 2), to the cooling aperture 200. The cooling aperture 200 includes an outer surface 210 and an inner surface 212, with the outer surface 210 nearer to the exterior surface 134 (FIG. 2) than the inner surface 212. The cooling aperture 200 extends between a first side 214 and a second side 216. The diffuser outlet 206 includes an upstream edge 218 spaced from a downstream edge 220, extending between the first side 214 and the second side 216.

A flared portion 230 is defined at the first side 214 and the second side 216 partially defining the impingement portion 202 and the diffusion portion 204. An intermediate region 232 is defined between the flared portion 230 at each of the first and second sides 214, 216 and partially defines both the impingement portion 202 and the diffusion portion 204. The flared portions 230 are formed into the outer surface 210 such that the outer surface 210 is non-planar resultant of the flared portions 230, while the inner surface 212 can be substantially planar for each of the impingement and diffusion portions 202, 204. The flared portions 230 have a round or circular geometry defining the first and second sides 214, 216 and have rounded or curved transitions at the intermediate region 232.

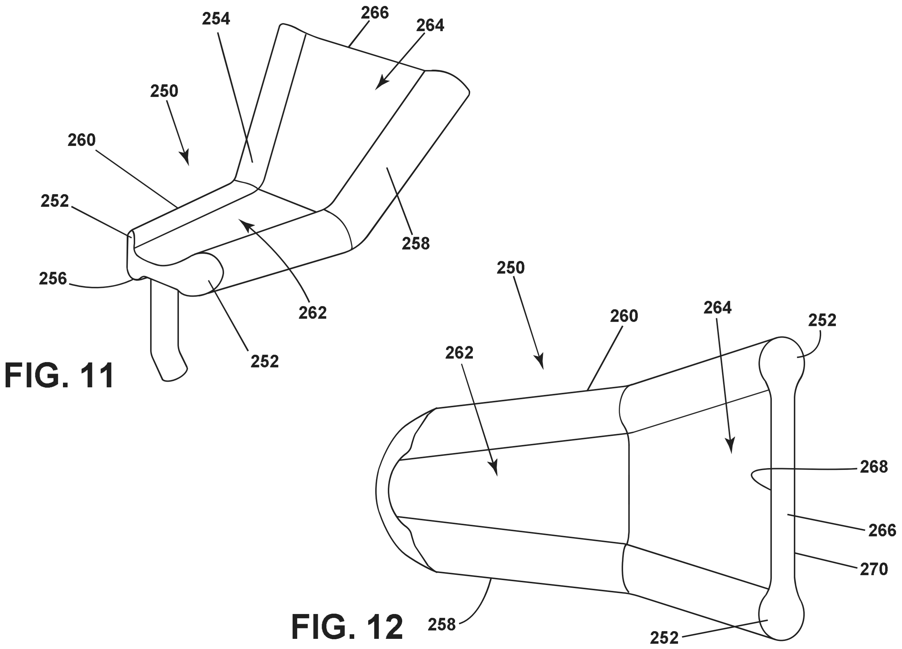

In another example, the flared portion can be formed on both the outer and inner surfaces. For example, FIGS. 11-12 show a cooling aperture 250 that is substantially similar to that of FIGS. 3-7 and FIGS. 9-10, and the discussion will be limited to differences therebetween. The cooling aperture 250 includes flared portions 252 defined within both an outer surface 254 and an inner surface 256. The flared portions 252 are provided both a first side 258 and a second side 260, partially defining both an impingement portion 262 and a diffusion portion 264. The flared portions 252 are defined at a diffuser outlet 266, partially defining an upstream edge 268 and a downstream edge 270.

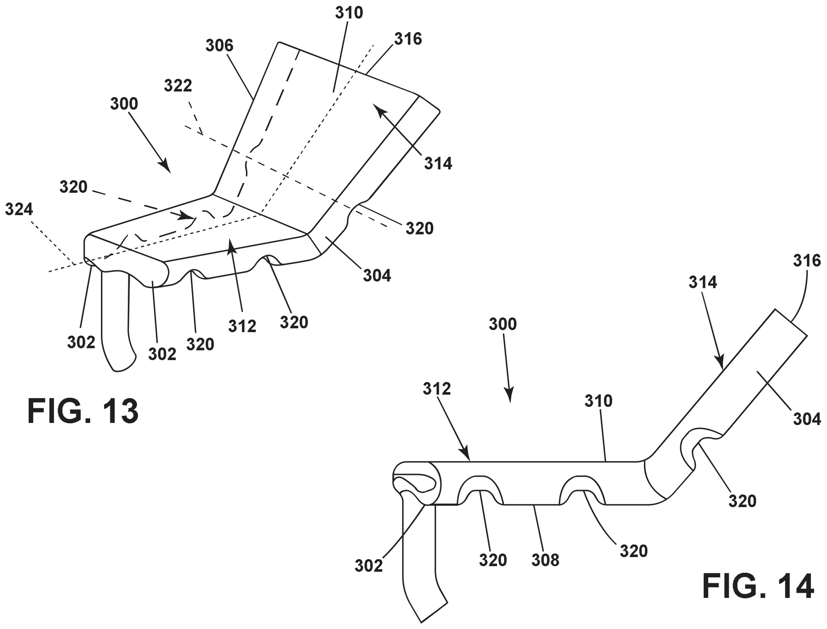

In some examples, one or more turbulators are provided on the flared portions. For example, FIGS. 13-14 show a cooling aperture 300, that is substantially similar to that of FIGS. 3-7, FIGS. 9-10, and FIGS. 11-12 and the discussion will be limited to differences therebetween. The cooling aperture 300 includes a flared portion 302 at both a first side 304 and a second side 306 and extends into an inner surface 308 being spaced from an outer surface 310. The cooling aperture 300 includes an impingement portion 312 extending to a diffusion portion 314 that exhausts at a diffuser outlet 316.

A set of turbulators 320 are formed within the flared portions 302. The set of turbulators 320 can be provided within the flared portion 302 defining both the first side 304, as shown, and the second side 306, with the set of turbulators 320 shown in broken line. While two turbulators 320 are shown positioned at the first side 304 within the impingement portion 312, and one turbulator is shown at the first side 304 within the diffusion portion 314, it should be appreciated that any number, position, size, or arrangement for the turbulators 320 is contemplated.

In non-limiting examples, there can be equal or unequal numbers of turbulators 320 among the flared portions 302 of the first side 304 and the second side 306, the impingement portion 312 and the diffusion portion 314, or among all of the first side 304, the second side 306, the impingement portion 312, and the diffusion portion 314. In another non-limiting example, the turbulators 320 can be aligned among the first side 304 and the second side 306, such as having a common arrangement. Such a common arrangement can be an alignment among a lateral axis 322, defined perpendicular to a center axis 324 defined equidistant between the first side 304 and the second side 306. In another non-limiting example, an offset or staggered arrangement is contemplated, wherein the turbulators 320 are unaligned and equally spaced, relative to any lateral axis 322 arranged at any position along the center axis 324.

In additional non-limiting examples, any size or shape for the turbulators 320 is contemplated. As is appreciable in FIGS. 13-14, the turbulators 320 have a rounded shape, such as defining at least a portion of a sphere, hemisphere, or other rounded shape, while any suitable shape or cross-sectional shape is contemplated, such as rounded, circular spherical, ellipsoidal, linear, squared, rectangular, box-shaped, triangular, conic, tetrahedral, pyramidal, sinusoidal or corrugated, or combinations thereof in non-limiting examples. The particular shape of each turbulator 320 can vary by position along the flared portions 302, such that different turbulator shapes are provided at different positions along the flared portions 302. Similarly, the size of the turbulators 320 can be the same, or consistent for all turbulators, while a variable sizing is contemplated. Such a variable size can be defined by the different shapes for the turbulators 320, for example, or can be defined by differences in volume, height, width, length, or combinations thereof in non-limiting examples. In yet another non-limiting example, the turbulator 320 can be positioned at a diffuser outlet 316, such that the shape of the diffuser outlet 316 is at least partially defined by the turbulator 320 within the flared portion 302, being located at the diffuser outlet 316. In yet another non-limiting example, the turbulators 320 can be in the form of a pin or rod, extending fully or partially into or across the flared portion 302.

The turbulators 320 provide for inducing turbulence to a flow of fluid passing through the flared portions 302 and contacting the turbulators 320. Such a turbulence can increase local heat transfer, increasing total heat transfer achieved by the cooling aperture 350. Additionally, the turbulators 320 can decrease effective areas of the cooling aperture 350, which results in a relatively lesser flow rate to achieve similar heat transfer as compared to a cooling aperture without turbulators.

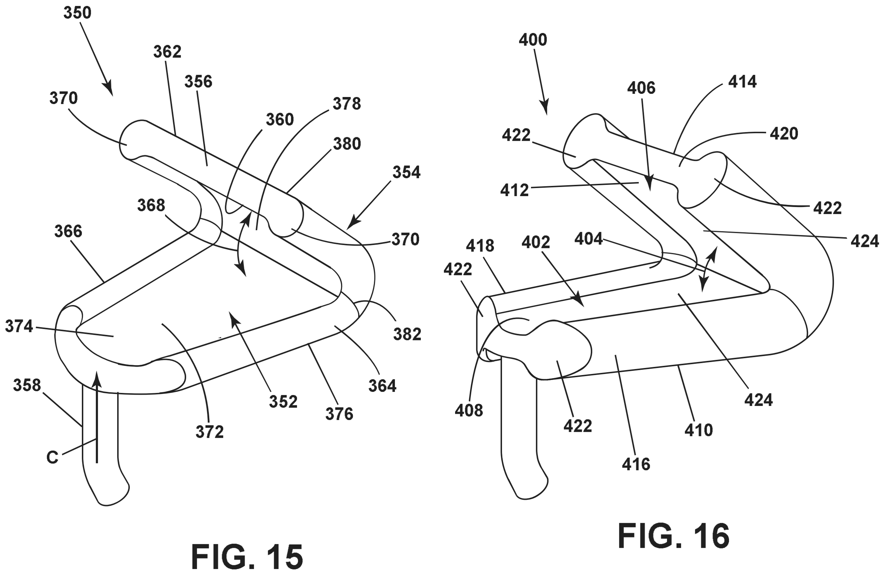

FIG. 15 shows another example cooling aperture 350 that can be implemented on the airfoil 104 of the turbine blade assembly 100 (FIG. 2). The cooling aperture 350 includes an impingement portion 352 and a diffusion portion 354, and exhausts at a diffuser outlet 356. A metering hole 358 couples to the impingement portion 352 to supply a cooling fluid flow (C) to the cooling aperture 350. The cooling aperture 350 extends between a first side 364 and a second side 366. The diffuser outlet 356 includes an upstream edge 360 spaced from a downstream edge 362, extending between the first side 364 and the second side 366. The first side 364 and the second side 366 each include a flared portion 370, while an intermediate region 372 is defined between the flared portions 370 partially defining both the impingement portion 352 and the diffusion portion 354.

The impingement portion 352 includes an outer surface 374 and an inner surface 376, and the cooling fluid flow (C) impinges upon the outer surface 374 when exhausting from the metering hole 358. The impingement portion 352 is positioned at an angle 368 relative to the diffusion portion 354, where the angle 368 can be greater than one degree (1°) and less than 90 degrees (90°), such that the diffusion portion 354 at least partially overlays the impingement portion 352. In alternative examples, it is contemplated that the angle 368 can be greater than or equal to one degree (1°) and less than or equal to 180 degrees (180°), where the angle 368 greater than 90 degrees defines the diffusion portion 354 that does not overlay the impingement portion 352 (see FIG. 3-13), where the angle 368 lesser than 90 degrees defines the angle 368 that does overlay the impingement portion 352 (see FIGS. 14-17), or where the angle 368 is 90 degrees defining the diffusion portion 354 positioned perpendicular to the impingement portion 352.

The diffusion portion 354 includes an upstream surface 378 and a downstream surface 380 where the upstream surface 378 is positioned nearer to the impingement portion 352 than the downstream surface 380 due to the angled arrangement between the impingement portion 352 and the diffusion portion 354. As the diffusion portion 354 partially overlays the impingement portion 352, the upstream surface 378 of diffusion portion 354 at least partially overlays the outer surface 374 of the impingement portion 352. If the angle 368 is great enough, or the length of the diffusion portion 354 is great enough, or both, then at least a portion of the downstream surface 380 can also overlay the impingement portion 352, defined in a direction perpendicular to the outer surface 374 of the impingement portion 352.

The flared portions 370 extend into the outer surface 374 of the impingement portion 352, and then turn at a junction 382 between the impingement portion 352 and the diffusion portion 354 to extend into the upstream surface 378 of the diffusion portion 354. The flared portions 370 at least partially define the geometry of the diffuser outlet 356 at the upstream edge 360.

In other examples, the flared portions extend into both the outer and inner surfaces. For example, FIGS. 16 shows another example cooling aperture 400 that can be implemented on the airfoil 104 of the turbine blade assembly 100 (FIG. 2). The cooling aperture 400 is substantially similar to that of FIG. 15 and the discussion will be limited to differences therebetween. The cooling aperture 400 includes an impingement portion 402 that is positioned at an angle 404 relative to a diffusion portion 406, where the angle 404 is less than 90 degrees (90°) such that the diffusion portion 406 at least partially overlays the impingement portion 402. The impingement portion 402 includes an outer surface 408 and an inner surface 410, and the diffusion portion 406 includes an upstream surface 412 and a downstream surface 414. A first side 416 of the cooling aperture 400 is spaced from a second side 418, and the first and second sides 416, 418 extend from the impingement portion 402 and the diffusion portion 406 to a diffuser outlet 420. Flared portions 422 are provided at the first and second sides 416, 418 extending into the outer surface 408, the inner surface 410, the upstream surface 412, and the downstream surface 414, and define an intermediate region 424 between the flared portions 422. The flared portions 422 at least partially define the diffuser outlet 420.

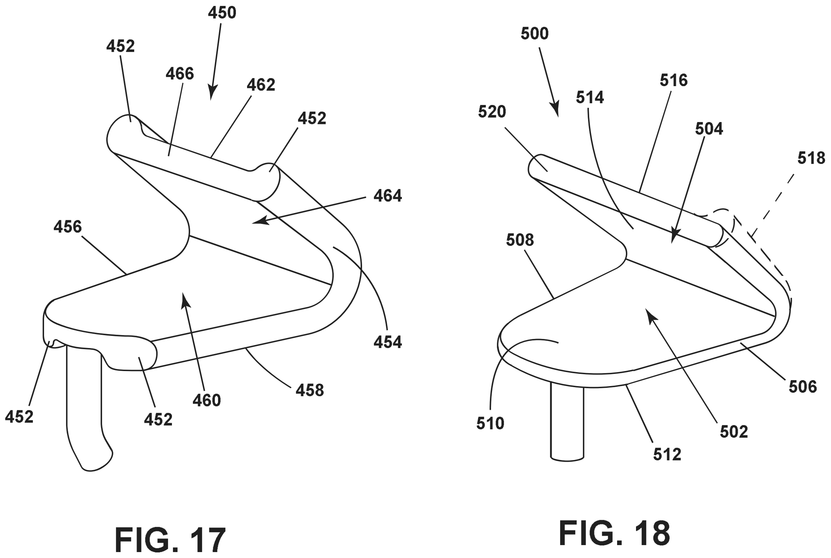

FIG. 17 shows another example cooling aperture 450 that can be implemented on the airfoil 104 of the turbine blade assembly 100 (FIG. 2). The cooling aperture 450 is substantially similar to that of FIGS. 15-16 and the discussion will be limited to differences therebetween. The cooling aperture 450 includes a flared portion 452 defined at a first side 454 and a second side 456 of the cooling aperture 450. The flared portion 452 at the first and second sides 454, 456 extend into an inner surface 458 of an impingement portion 460, and into a downstream surface 462 of a diffusion portion 464, at least partially defining a diffuser outlet 466.

FIG. 18 shows another example cooling aperture 500 that can be implemented on the airfoil 104 of the turbine blade assembly 100 (FIG. 2). The cooling aperture 500 is substantially similar to that of FIGS. 15-17 and the discussion will be limited to differences therebetween. Specifically, the cooling aperture 500 includes an impingement portion 502 that transitions to and at least partially overlays a diffusion portion 504, while no part of the cooling aperture 500 includes a flared portion, as compared to that of FIGS 15-17. In additional non-limiting examples, the cooling aperture 500 can include one or more flared portions 518 (shown in broken line) in discrete arrangement positioned along only one side of the cooling aperture 500, shown along a first side 506 and only within the diffusion portion 504. It should be appreciated that flared portions 518 may be utilized at only one side of a first side 506 and a second side 508, at only one of the impingement portion 502 and the diffusion portion 504, or at one of an outer surface 510, an inner surface 512, an upstream surface 514, or a downstream surface 516, or combinations thereof in non-limiting examples. In a non-limiting example, the flared portion 518 can be local to a diffuser outlet 520, such that the flared portion 518 at the first side 506 is only at the diffuser outlet 520. The length at which the flared portion 518 extends along the first side 506 can be the same as the flare width (Wf) or a flare height (Hf), in non-limiting examples (see FIG. 8).

In this way, it should be appreciated that discrete flared portions are contemplated, or that two or more different flared portions are defined within a single cooling aperture. Such discrete or different flared portions can be similar or different, such as having different lengths, widths, sizes, geometries, positions, or combinations thereof in non-limiting examples. The application of discrete or different flared portions within a single cooling aperture can be utilized to tailor local heat transfer, film cooling, or stress mitigation needs to the particular component in which the cooling aperture is positioned. For example, where local stresses are increased at a diffuser outlet for an exemplary cooling aperture, the use of the flared portions can mitigate such stress, particularly at the diffuser outlet, while the absence of flared portions within an impingement portion can be used to control flow rates or volumes within the cooling aperture prior to exhausting at the diffuser outlet. As can be appreciated, the particular implementation of the cooling aperture 500 can define the particular arrangements, positions, or sizes of the flared portions.

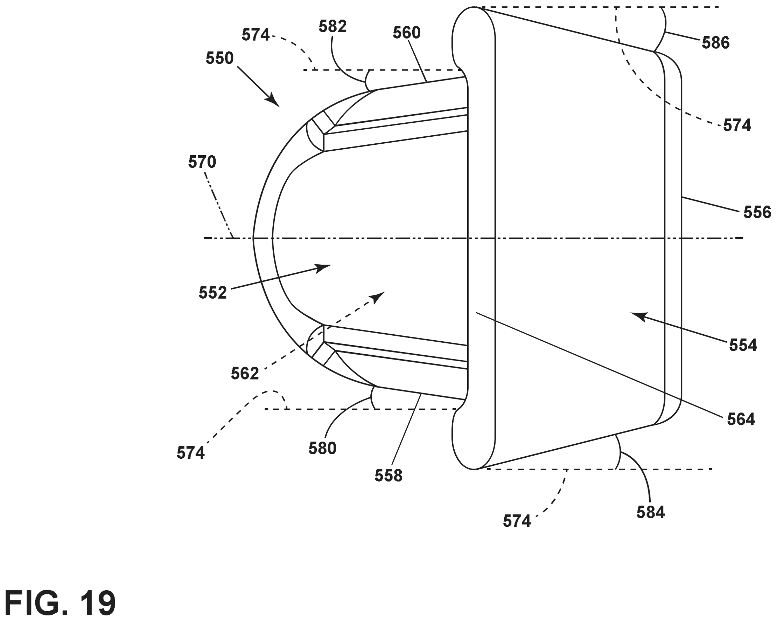

In some examples, both the impingement portion and the diffusion portion of a cooling aperture can have a converging or diverging shape. For example, FIG. 19 shows another example cooling aperture 550 that can be implemented on the airfoil 104 of the turbine blade assembly 100 (FIG. 2). The cooling aperture 550 includes an impingement portion 552 and a diffusion portion 554 meeting at a junction 556. A first side 558 is spaced from a second side 560 at least partially defining a cavity 562 for the cooling aperture 550, with the first side 558 and the second side 560 spanning both the impingement portion 552 and the diffusion portion 554. The cavity 562 exhausts at a diffuser outlet 564 at the diffusion portion 554.

A center axis 570 can be defined extending along the cooling aperture 550 equidistant between the first side 558 and the second side 560. The first side 558 and the second side 560 can each define an angle relative to an axis 574 being parallel to the center axis 570. The axes 574 are shown positioned along the first and second sides 558, 560, at both the impingement portion 552 and the diffusion portion 554. The first side 558 can define a first angle 580 for the impingement portion 552 relative to the axis 574, and the second side 560 can define a second angle 582 for the impingement portion 552 relative to the axis 574. Similarly, the first side 558 can define a third angle 584 for the diffusion portion 554, relative to the axis 574, and the second side 560 can define a fourth angle 586 for the diffusion portion 554, relative to the axis 574.

The first angle 580, the second angle 582, the third angle 584, and the fourth angle 586 can be greater than or equal to 0 degrees (0°) and less than or equal to 45 degrees (45°) while any angle less than 90 degrees (90°) is contemplated. In a non-limiting example, the first, second, third, and fourth angles 580, 582, 584, 586 can be the same angle, defining a symmetric arrangement for the first and second sides 558, 560. In additional non-limiting examples, it is contemplated that one or more of the first, second, third, and fourth angles 580, 582, 584, 586 can be similar or dissimilar. That is, any of the first, second, third, and fourth angles 580, 582, 584, 586 can be the same as or different from any other of the first, second, third, and fourth angles 580, 582, 584, 586.

The particular angles defined at the first and second sides 558, 560, at the impingement portion 552 and the diffusion portion 554, can define the rate at which the cavity 562 expands or diverges extending toward the diffuser outlet 564, varying the flow rates or pressures for the cavity 562 by virtue of the rate of change in cross-sectional area as defined by the first, second, third, and fourth angles 580, 582, 584, 586 for the first and second sides 558, 560. It is beneficial to have a larger area or volume covered by the cooling aperture 550 in order to maximize heat transfer cooling over as large of an area as possible, as well as maximizing the area of a cooling film exhausted from the diffuser outlet 564. However, such maximizing of the heat transfer and cooling film must be balanced against cooling fluid flow rates provided to and passing within the cooling aperture 550 in order to achieve the expected heat transfer and cooling film development, as too small of a flow rate or volume can result in poor heat transfer or a cooling film that is too thin or develops gaps. Such a balance can be achieved through the arrangement and geometry of the cooling aperture 550 by the particular rate of expansion for the cooling aperture 550 defined by the first, second, third, and fourth angles 580, 582, 584, 586.

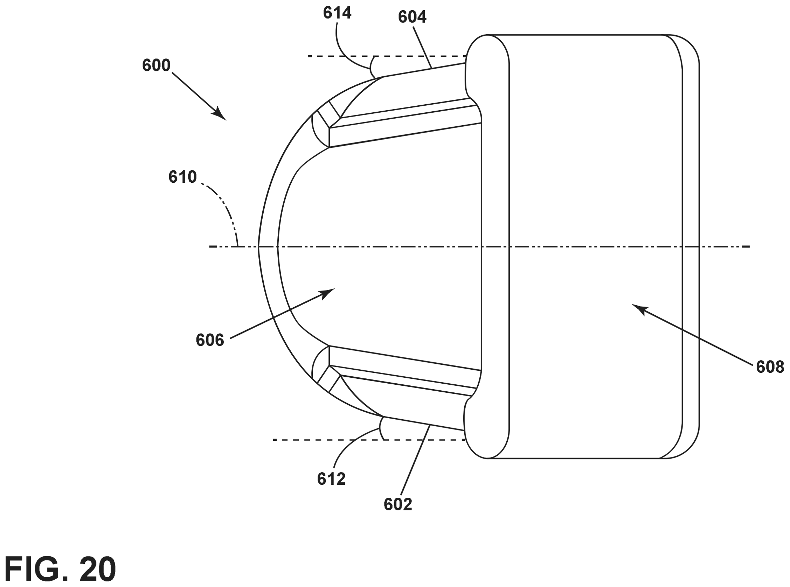

FIG. 20 shows another example cooling aperture 600 that can be implemented on the airfoil 104 of the turbine blade assembly 100 (FIG. 2). The cooling aperture 600 can be substantially similar to that of FIG. 19, and the discussion will be limited to differences therebetween. The cooling aperture 600 includes a first side 602 and a second side 604 partially defining an impingement portion 606 and a diffusion portion 608. As can be appreciated, the first side 602 and the second side 604 for the diffusion portion 608 are parallel to a center axis 610 defined equidistant between the first side 602 and the second side 604, while the first side 602 and the second side 604 for the impingement portion 606 define a first angle 612 and a second angle 614, respectively, which are non-parallel to the center axis 610.

It should be appreciated that the rate of expansion can differ between the impingement portion 606 and the diffusion portion 608, while similar rates of expansion, such as that of FIGS. 19-20, is contemplated. That is, the impingement portion 606, the diffusion portion 608, or portions of one or both thereof, can be parallel or non-parallel to the center axis 610, while discrete or local changes in the first and second sides 602, 604 are also contemplated.

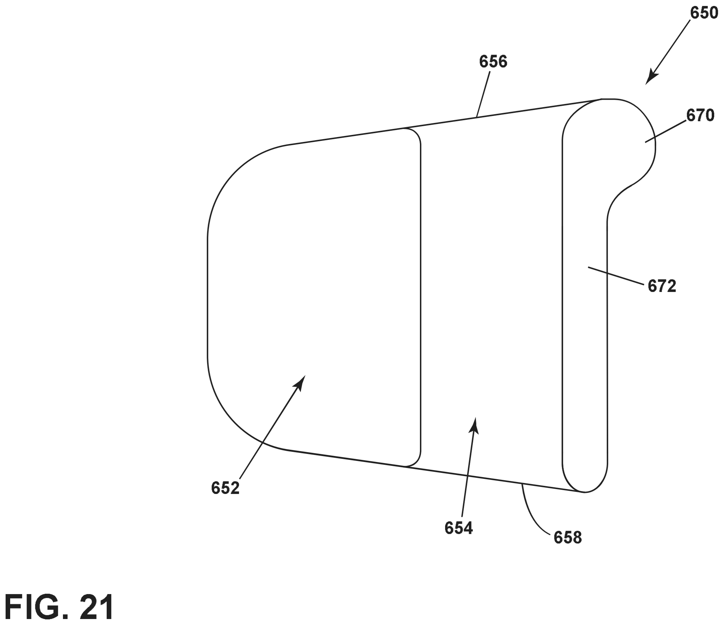

In some examples, a cooling aperture has a flared portion only along one side. For example, FIG. 21 shows another example cooling aperture 650 that can be implemented on the airfoil 104 of the turbine blade assembly 100 (FIG. 2). The cooling aperture 650 includes an impingement portion 652 extending to a diffusion portion 654 exhausting at a diffuser outlet 672. The cooling aperture 650 is further defined between a first side 656 and a second side 658 partially defining the impingement portion 652 and the diffusion portion 654.

A flared portion 670 is provided at the first side 656, while the second side 658 includes no flared portion. It should be appreciated that the flared portions 670 can position at only one side of the cooling aperture 650, such as only at the first side 656, while discrete flared portions are contemplated, such as that discussed in FIG. 18. Such a discrete portion may be defined only at one of the first side 656, the second side 658, or only a portion thereof, or only at the impingement portion 652 or the diffusion portion 654, or only portions thereof. In this way, it should be understood that any flared portion 670 having any length, position, or arrangement is contemplated at the first side 656, the second side 658, the impingement portion 652, and the diffusion portion 654, or combinations thereof.

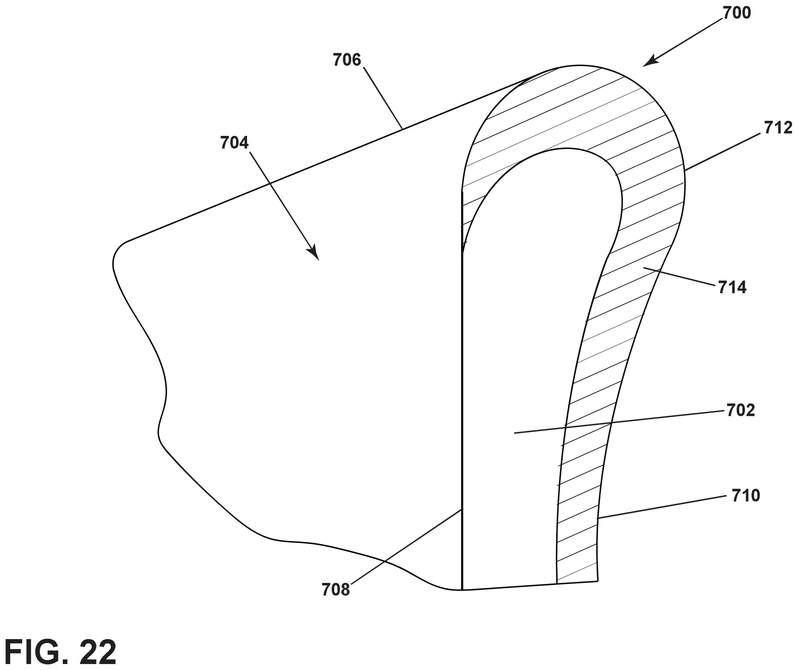

FIG. 22 shows another example cooling aperture 700 that can be implemented on the airfoil 104 of the turbine blade assembly 100 (FIG. 2). The cooling aperture 700 is shown in an enlarged view depicting a diffuser outlet 702 for a diffusion portion 704 at a first side 706. The diffuser outlet 702 can include an upstream edge 708 and a downstream edge 710. A flared portion 712 is provided at the first side 706, terminating at the diffuser outlet 702. A coating 714 can be applied to the component carrying the cooling aperture 700, such as a thermal barrier coating on the exterior of the turbine blade 68 (FIG. 1). Additional non-limiting examples for the coating 714 can include a hydrophobic coating, an ice-phobic coating, a wear-resistant coating, or an impact-resistant coating.

At least a portion of the coating 714 can extend into the cooling aperture 700 through the diffuser outlet 702. Existence of the coating 714 within the diffuser outlet 702 can be the result of the coating 714 passing into the cooling aperture 700 during application of the coating 714 and may be intentional or unintentional. Due to the existence of the coating 714 with the area of the diffuser outlet 702, the cross-sectional area or radius of the flared portion 712 is decreased by the amount of coating 714 within the diffuser outlet 702. In a non-limiting example, the amount of coating 714 within the flared portion 712 can reduce the area of the flared portion 712 by less than or equal to 20%. In an additional non-limiting example, the amount of coating 714 within the flared portion 712 can reduce the area of the flared portion 712 by less than 5%. In another non-limiting example, manufacture of the cooling aperture 700 is contemplated in a manner that prevents any of the coating 714 from entering the diffuser outlet 702, such as by plugging the cooling aperture 700 at the diffuser outlet 702, machining to remove any of the coating 714 that passes into the diffuser outlet 702, or manufacturing the cooling aperture 700 into a component that already has a coating 714, such that manufacture removes any coating 714 at the diffuser outlet 702.

During manufacture, at least a portion of the flared portion 712 is filled with the coating 714, such that a radius or cross-sectional area of the flared portion 712 is reduced. Such a reduction can be a percentage of the radius or cross-sectional area respective of a thickness of the coating 714. In a non-limiting example, a reduction in radius or cross-sectional area can be greater than 10%. In another example, during manufacture, at least a portion of the cooling aperture 700 at the flared portion 712 and the diffuser outlet 702 is filled with the coating 714 to define a reduced height at the diffuser outlet between the upstream edge 708 and the downstream edge 710.

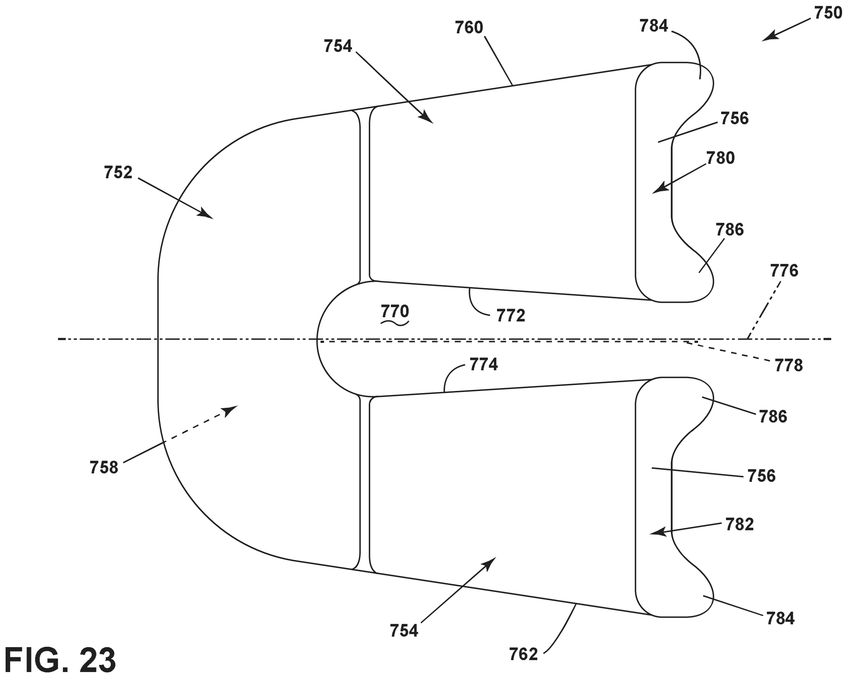

FIG. 23 shows another example cooling aperture 750 that can be implemented on the airfoil 104 of the turbine blade assembly 100 (FIG. 2). T cooling aperture 750 includes an impingement portion 752 and a diffusion portion 754 exhausting at a diffuser outlet 756. The cooling aperture 750 includes a cavity 758 defined by the impingement portion 752 and the diffusion portion 754, with the cooling aperture 750 extending between a first side 760 and a second side 762.

The cooling aperture 750 is further defined by a centerbody 770, which can be formed by an outer wall or substrate of the component carrying the cooling aperture 750, such as the outer wall 118 of the airfoil 104 of FIG. 2 in a non-limiting example. The cooling aperture 750 further includes an inner first side 772 and an inner second side 774 at sides of the centerbody 770. The geometry of the centerbody 770, and thus, the geometry of the inner first and second sides 772, 774 defines the geometry for the cooling aperture 750 and the cavity 758. It is contemplated that the centerbody 770 can be symmetric, relative to a center axis 776 defined equidistant between the first side 760 and the second side 762, or relative to a centerbody axis 778 defined equidistant between the inner first side 772 and the inner second side 774. In additional non-limiting examples, the centerbody 770 can be asymmetric relative to the centerbody axis 778, can be symmetric relative to the centerbody axis 778 while being asymmetric relative to the center axis 776, or can be asymmetric or symmetric relative to one or both of the center axis 776 and the centerbody axis 778. In non-limiting examples, geometries for the centerbody 770 can be round, elliptical, airfoil shaped, square, diamond, rectangular, linear, curved, or combinations thereof.

The centerbody 770 separates the diffuser outlet 756 into a first outlet portion 780 and a second outlet portion 782. The first outlet portion 780 can be the same as or symmetric with the second outlet portion 782, such as relative to the center axis 776, while separate, individual, or asymmetric geometries are contemplated.

A flared portion 784 is provided at each of the first side 760 and the second side 762 and terminates at the diffuser outlet 756. Additionally, an interior flared portion 786 is provided at each of the inner first side 772 and the inner second side 774, also terminating at the diffuser outlet 756. The flared portions 784, 786 can be consistent or the same for each of the first and second sides 760, 762 and the inner first and second sides 772, 774, such as having a common shape, geometry, radius, or height. In a non-limiting example, the flared portions 784, 786 need not be the same at the first and second sides 760, 762 and the inner first and second sides 772, 774, such as having different geometries or positions for the flared portions 784, 786. For example, the flared portions 784 for the first and second sides 760, 762 can extend in the downstream direction (such as that of FIGS. 3-7), while flared portions 786 for the inner first and second sides 772, 774 can extend in the upstream direction (such as that of FIGS. 8-9). In this way, it should be appreciated that a plurality of different combinations of geometries for the flared portions 784, 786 defining the cooling aperture 750 are contemplated, being consistent, inconsistent, similar, or dissimilar from other flared portions 784, 786 of the cooling aperture 750.

Furthermore, while only a single centerbody 770 is shown, any number of centerbodies is contemplated, including one or more. For example, a cooling aperture that incorporating two centerbodies would define three outlet portions for the diffuser outlet 756, as well as defining additional inner first and second sides, which may include or incorporate the flared portions 784, 786. Additionally, where more than one centerbody is utilized, it is contemplated that the centerbodies are similar or dissimilar, or where multiple centerbodies are utilized, that two or more of those multiple centerbodies are similar. Such a similarity can be defined by the size, shape, or other geometry for such centerbodies.

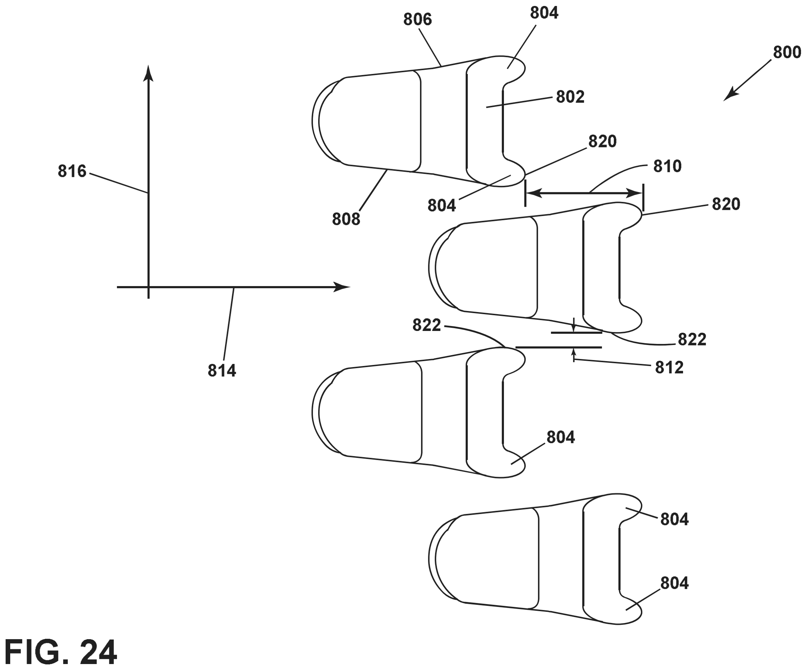

Referring to FIGS. 24-26, different arrangements for sets of multiple cooling apertures are disclosed. Where a component, such as the airfoil 104 of FIG. 2, requires cooling from more than one cooling aperture, the arrangement of multiple cooling apertures can be defined in a way to reduce stress while maximizing local heat transfer cooling and film cooling application.

FIG. 24 shows a set of cooling apertures 800 in a staggered arrangement, with each cooling aperture 800 including a diffuser outlet 802 with a flared portion 804 at each of a first side 806 and a second side 808. The staggered arrangement can be defined by both a first spacing distance 810 defined in a first direction 814 and a second spacing distance 812 defined in a second direction 816. In a non-limiting example, the first direction 814 can be defined in the chord-wise direction (FIG. 2) and the second direction 816 can be defined in the span-wise direction (FIG. 2), while the particular directions can be respective of the particular component carrying the cooling apertures 800. In another non-limiting example, the first direction 814 can be defined perpendicular to the second direction 816.

The first spacing distance 810 can be defined between downstream ends 820 of the flared portions 804 at the diffuser outlets 802, defined in the first direction 814. The second spacing distance 812 can be defined between a furthest side extent 822 of the flared portions 804 at the first and second sides 806, 808, at the diffuser outlet 802, defined in the second direction 816. The furthest side extent 822 of the flared portions 804 can be defined at the first and second sides 806, 808 having the greatest distance for the diffuser outlet 802 extending in the second direction 816. In some examples, the first spacing distance 810 is 0 to 0.3 inches (0 to 7.62 millimeters (mm)). In some examples, the second spacing distance 812 is 0 to 0.08 inches (0 to 2.032 millimeters (mm)).

The staggered arrangement reduces local stresses by spacing the diffuser outlets 802 as well as their respective flared portions 804 in the first direction 814, reducing or eliminating aggregate stresses among adjacent cooling apertures 800. Additionally, the second spacing distance 812 in the second direction 816 still permits cooling film coverage to spread in the second direction 816, reducing the total number of required cooling apertures 800, and further reducing local stresses by the space occupied by the second spacing distance 812.

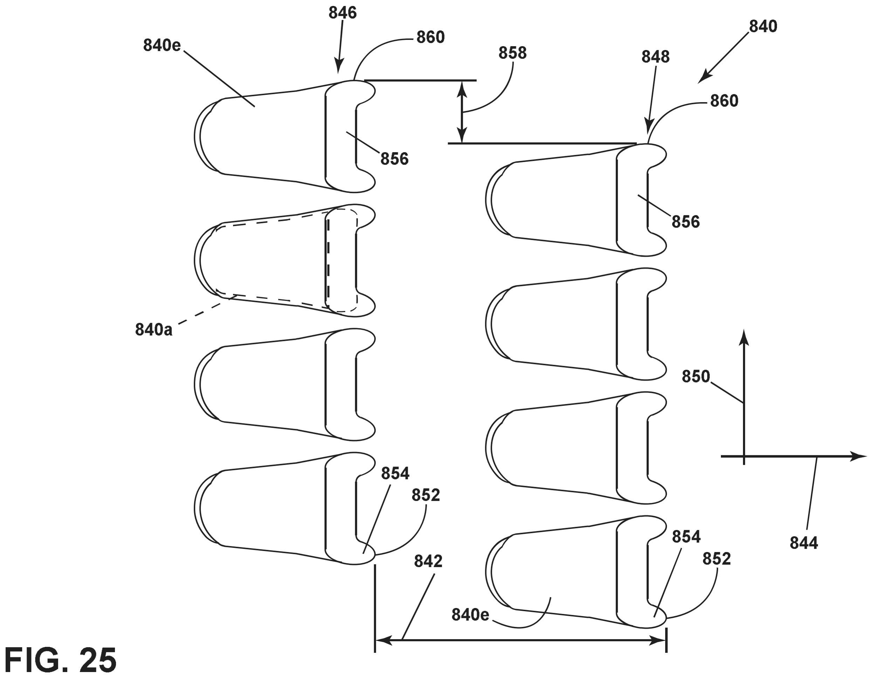

Referring to FIG. 25, an overlapping staggered arrangement for a set of cooling apertures 840 can be separated into a first row 846 and a second row 848. The first row 846 is spaced from the second row 848 by a first spacing distance 842 in a first direction 844. The first spacing distance 842 can be defined between downstream ends 852 of flared portions 854 at a diffuser outlet 856 of the cooling apertures 840. In some examples, the first spacing distance 842 is 0.10 to 0.50 inches (2.54 to 12.7 millimeters (mm)).

The cooling apertures 840 in each of the first row 846 and the second row 848 are offset by a second spacing distance 858 in a second direction 850, such that the cooling apertures 840 in the first row 846 overlap cooling apertures 840 in the second row 848 defined in the second direction 850. The second spacing distance 858 can be defined between furthest side extents 860 among common sides for cooling apertures 840 for the first and second rows 846, 848 in the first direction 844. In some examples, the second spacing distance 858 is 0 to 0.3 inches (0 to 7.62 millimeters (mm)). Each cooling aperture of the set of cooling apertures 840 overlaps with two other cooling apertures of the set of cooling apertures 840 in the other row, except for the cooling apertures 840e, which can be arranged at an end of each of the first and second rows 846, 848, which only overlap one other cooling aperture 840 in another of the first or second row 846, 848. Such an overlapping defines a staggered arrangement for the set of cooling apertures 840 that further reduces stress along the component by arranging the flared portions 854 unaligned between the staggered cooling apertures 840 in different rows of the first and second rows 846, 848, defined in the first direction 844. Such unalignment and spacing mitigates or eliminates aggregate increases in local stresses among the set of cooling apertures 840.

In a non-limiting example, it is contemplated that one or more cooling apertures of the set of cooling apertures 840 of one or both of the first and second rows 846, 848 do not include the flared portion 854, such as a cooling aperture 840a shown in broken line having no flared portion. It should be appreciated that one or more cooling apertures 840 of the first and second rows 846, 848 need not include a flared portion 854, or that discrete arrangements of cooling apertures of the set of cooling apertures 840, with or without flared portions 854, is contemplated. For example, each cooling aperture of the set of cooling apertures 840 in the second row 848 includes two flared portions 854, while not all cooling apertures of the set of cooling apertures 840 in the first row 846 include the flared portions 854, when considering the cooling aperture 840a in broken line. Furthermore, each cooling aperture of the set of cooling apertures 840 can have its own discrete arrangement, inclusion, or lack thereof of flared portions 854, such that the particular arrangement of flared portions 854 for the first and second rows 846, 848 is tailored to particular needs of the component upon which the cooling apertures 840 are being utilized.

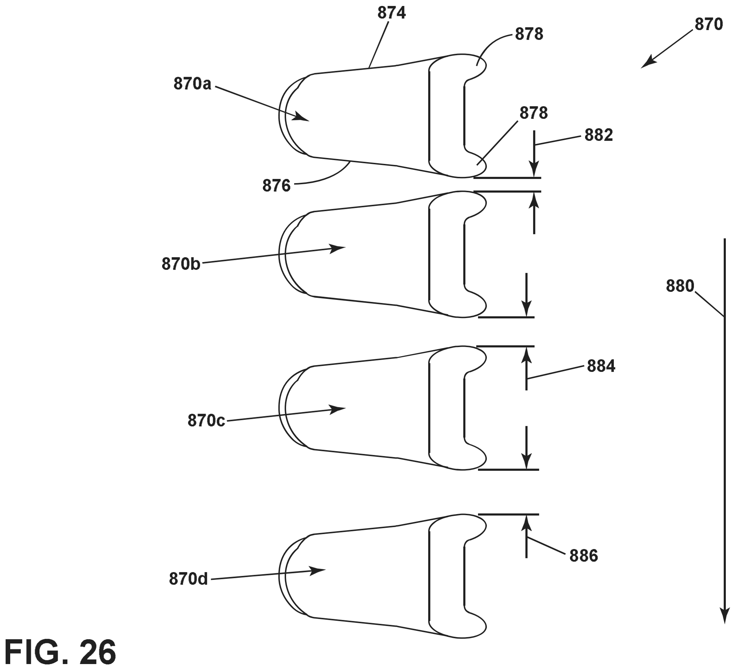

Referring to FIG. 26, a set of cooling apertures 870 each extend between a first side 874 and a second side 876. Each cooling aperture 870 includes a flared portion 878 at each of the first side 874 and the second side 876.

As can be appreciated, each cooling aperture of the set of cooling apertures 870 is spaced from the nearest cooling aperture, with the spacing increasing along a first direction 880. In a non-limiting example, the first direction 880 can be along or parallel with the span-wise direction (SPd) of FIG. 2, while any direction or orientation is contemplated. A first cooling aperture 870a is spaced from a second cooling aperture 870b by a first spacing distance 882, the second cooling aperture 870b is spaced from a third cooling aperture 870c by a second spacing distance 884, and the third cooling aperture 870c is spaced from a fourth cooling aperture 870d by a third spacing distance 886. As the spacing for the set of cooling apertures 870 increases in the first direction 880, the second spacing distance 884 is greater than the first spacing distance 882, and the third spacing distance 886 is greater than the second spacing distance 884.

It is contemplated that the first, second, and third spacing distances 882, 884, 886 can increase in the first direction 880, or any direction, at a constant rate, while a non-constant rate is contemplated, such as an exponential rate or logarithmic rate in non-limiting examples. Such a change in spacing between the set of cooling apertures 870 can be used to meet local heat transfer and cooling film requirements, while increasing spacing locally to reduce local stresses among adjacent cooling apertures of the set of cooling apertures 870.

It will be appreciated that the number, size, and configuration of the cooling apertures are provided by way of example only and that in other exemplary embodiments, the cooling apertures may have any other suitable configuration. The aspects and features provided herein need not be limited to the embodiments as shown, and it is further contemplated that features and aspects from one or more embodiments can be added, removed, or interchanged with one or more other embodiments to define additional embodiments herein. For example, aspects from one embodiment can be combined with aspects of another embodiment.

Benefits associated with the cooling apertures described herein include reduced local and aggregate stresses for one or more cooling apertures, improved local cooling and heat transfer of the component or airfoil, as well as improve film cooling of the component or airfoil downstream of the cooling aperture. The geometric envelope for determining the cooling aperture, its position, or its particular features, or its structure are determined by the airfoil being manufactured, the location of the airfoil in the engine, the materials used, the position of the cooling aperture, or any other design constraint. Narrowing these multiple factors to a region of possibilities saves time, money, and resources, as well as producing a superior performing airfoil having superior cooling and cooling film distribution.

The flared portion as described herein provides a local increase in radii within the cooling aperture, which reduces stress concentrations at the cooling apertures and the outlets thereof. The reduction of stress can increase component lifetime, while minimizing impact on cooling performance. Additionally, the use of the flared portion can provide room for excess coating or dust accumulation which can otherwise block or clog a cooling hole without a flared portion.

It should be understood that all cooling apertures described herein can be utilized in a single component, such as an airfoil, where desired, and that the cooling apertures disclosed herein are not mutually exclusive. Additionally, one or more aspects shown among different figures need not be limited as shown, and it is contemplated that aspects from one cooling aperture can be combined, interchanged, added, removed, or otherwise intermixed with aspects from other cooling apertures to define additional cooling apertures. Particular arrangements of the cooling apertures or the flared portions therein are beneficial in reducing local stresses, which differ across a single component. Therefore, particular flared portions or features of one cooling aperture may be combined with another cooling aperture in order to mitigate varying stresses across a common component.

The blade assemblies 100 of the HP turbine 34 and, specifically, the stage one blade assemblies 100 of the HP turbine 34, have the highest flow path temperature of any blade set in the gas turbine engine 10. These stage one blade assemblies also rotate at extremely high angular velocities. The extreme temperature environment and the high rotational speeds impart large forces on the stage one blade assemblies 100 that can lead to creep and fatigue, especially along the outer wall 118 of the airfoil 104. Creep and fatigue can lead to cracks or defects in a blade assembly 100 and, therefore, result in unexpected or premature part replacement that limits engine Time on Wing (TOW). The example blade assemblies 100 disclosed herein include cooling apertures with flared portions that reduce stress concentrations along the edges/sides of the cooling aperture and the diffuser outlet, while maintaining or improving exit flow distribution from the diffuser outlet along the exterior surface, which improves cooling film performance. Therefore, the designs disclosed herein help to improve durability of the blade assembly to withstand the above-noted stresses and, thus, help to reduce (e.g., minimize) creep and fatigue.

The inventors developed blade assembly designs that improved blade durability. Through this effort, the inventors determined that the diffuser outlet width (Wdo), minimum diffuser outlet height (Hdoₘᵢₙ), and flare diameter (Dfₘₐₓ) affect the heat transfer provided by the cooling hole and, thus, affect the durability of the blade assembly 300. Further, the inventors sought to adjust these parameters to achieve designs with relatively high blade durability (e.g., reduced creep and fatigue, absence of crack formation or propagation after a number of engine cycles) for a defined engine environment.

As explained above in connection with FIGS. 3-8, the diffuser outlet width (Wdo) (shown in FIG. 6) is the width of the diffuser outlet 156, as measured between the first and second ends 164, 166 at the diffuser outlet 156. The diffuser outlet height (Hdo) (shown in FIG. 6) is the height of the diffuser outlet 156 measured as the distance between the upstream edge 174 and the downstream edge 176 within the intermediate region 172. The diffuser outlet height (Hdo) may be constant along the intermediate region 172, but, in other examples, the diffuser outlet height can vary. As used herein, the minimum diffuser outlet height (Hdoₘᵢₙ) is the minimum or smallest diffuser outlet height of the diffuser outlet along the intermediate region 172. Further, as explained above in connection with FIGS. 3-8, the flare diameter (Df) (as shown in FIG. 8) is the diameter of the circle-shape along the side (e.g., the first side 166) at the outlet 156 at partially defining the flared portion 170. In general, increasing the minimum diffuser outlet height (Hdoₘᵢₙ) results in less stress concentrations along the sides 164, 166 of the diffuser outlet 156, which can reduce the need for a larger flare diameter (Df), but results in lower exit flow speeds from the diffuser outlet that can negatively impact film cooling. Conversely, decreasing the minimum diffuser outlet height (Hdoₘᵢₙ) results in greater stress concentrations along the sides 164, 166, which requires a larger flare diameter (Df). However, increasing the flare diameter (Df) can result in uneven flow distribution because the cooling flow tends to flow through the larger flared portions 170 than the narrower intermediate region 172 at the diffuser outlet 156, which reduces film cooling performance.

Table 1 below illustrates fourteen examples (denoted Ex. 1-14) of blade assemblies 100 developed by the inventors. Table 1 includes values for the diffuser outlet width (Wdo), the minimum diffuser outlet height (Hdoₘᵢₙ), and the flare diameter (Df) for each of the Examples 1-14.

**TABLE 1**

| | Wdo | Hdoₘᵢₙ | Df |
|---|---|---|---|
| Units | mm | mm | mm |
| Ex. 1 | 1.27 | 0.127 | 0.508 |
| Ex. 2 | 7.62 | 1.27 | 1.524 |
| Ex. 3 | 2.54 | 0.254 | 0.635 |
| Ex. 4 | 3.81 | 0.508 | 0.762 |
| Ex. 5 | 6.35 | 0.762 | 0.889 |
| Ex. 6 | 3.175 | 0.381 | 1.143 |
| Ex. 7 | 3.531 | 0.889 | 1.448 |
| Ex. 8 | 4.953 | 0.279 | 0.686 |
| Ex. 9 | 7.137 | 0.711 | 0.813 |
| Ex. 10 | 6.02 | 0.457 | 0.584 |
| Ex. 11 | 6.579 | 0.254 | 0.94 |
| Ex. 12 | 3.2 | 0.508 | 1.168 |
| Ex. 13 | 6.096 | 0.686 | 1.067 |
| Ex. 14 | 6.477 | 0.33 | 1.27 |

The inventors found that blade assembly designs with parameters defined in Examples 1-14 provide relatively low stress near the sides 164, 166 while maintaining or improving flow distribution for effective film cooling. The blade assemblies developed by the inventors shown in Table 1 can be characterized by two Expressions (1) and (2) that can be used to distinguish those designs in Examples 1-14 that meet desired performance requirements (i.e., stress reduction and improved cooling) from those designs that do not achieve the desired performance requirements. As such, the Expressions (1) and (2) can be used to identify an improved blade assembly design, better suited for a particular engine operating environment and taking into account the constraints imposed on blade assembly design with cooling holes used in such a system.

Expression (1) and (2) are defined are defined follows: $\left(\frac{Wdo}{{Hdo}_{min}}\right)$ (1) $\left(\frac{Df}{{Hdo}_{min}}\right)$ (2)

Values for the Expressions 1 and 2 for each of the Examples 1-14 of Table 1 are shown in Table 2.

**TABLE 2**

| | Wdo | Hdoₘᵢₙ | Df | Wdo/ Hdoₘᵢₙ | Df/ Hdoₘᵢₙ |
|---|---|---|---|---|---|
| Units | mm | mm | mm | unitless | unitless |
| Ex. 1 | 1.27 | 0.127 | 0.508 | 10.000 | 4.000 |
| Ex. 2 | 7.62 | 1.27 | 1.524 | 6.000 | 1.200 |
| Ex. 3 | 2.54 | 0.254 | 0.635 | 10.000 | 2.500 |
| Ex. 4 | 3.81 | 0.508 | 0.762 | 7.500 | 1.500 |
| Ex. 5 | 6.35 | 0.762 | 0.889 | 8.333 | 1.167 |
| Ex. 6 | 3.175 | 0.381 | 1.143 | 8.333 | 3.000 |
| Ex. 7 | 3.531 | 0.889 | 1.448 | 3.972 | 1.629 |
| Ex. 8 | 4.953 | 0.279 | 0.686 | 17.753 | 2.459 |
| Ex. 9 | 7.137 | 0.711 | 0.813 | 10.038 | 1.143 |
| Ex. 10 | 6.02 | 0.457 | 0.584 | 13.173 | 1.278 |
| Ex. 11 | 6.579 | 0.254 | 0.94 | 25.902 | 3.701 |
| Ex. 12 | 3.2 | 0.508 | 1.168 | 6.299 | 2.299 |
| Ex. 13 | 6.096 | 0.686 | 1.067 | 8.886 | 1.555 |
| Ex. 14 | 6.477 | 0.33 | 1.27 | 19.627 | 3.848 |

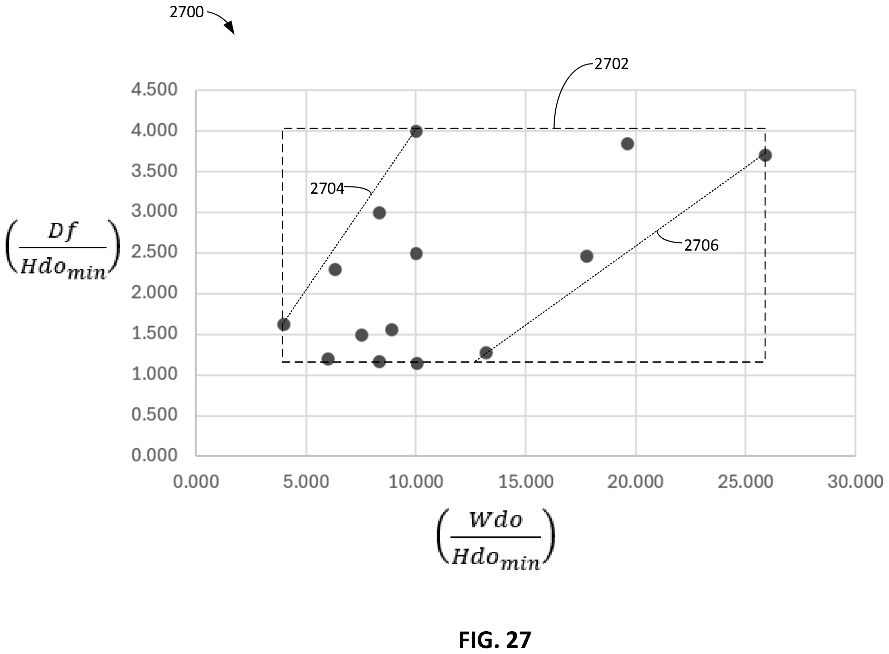

FIG. 27 is a graph 2700 showing the data points from Table 2 where Wdo/ Hdoₘᵢₙ is plotted on the X-axis and Df/ Hdoₘᵢₙ is plotted on the Y-axis. As represented by a boundary box 2702, it was determined that blade assembly designs with a Wdo/ Hdoₘᵢₙ value of 3.972 to 25.902 (i.e., 3.972 ≤ Wdo/ Hdoₘᵢₙ ≤ 25.902) and a Df/ Hdoₘᵢₙ value of 1.143 to 4.000 (i.e., 1.143 ≤ Df/ Hdoₘᵢₙ ≤ 4.000) advantageously meet the durability requirements while remaining within desired tolerances and being capable of use in existing engine systems. As such, benefits are realized when a manufactured component including the blade assembly 100 has a geometry where Wdo/ Hdoₘᵢₙ is 3.972 to 25.902 (i.e., 3.972 ≤ Wdo/ Hdoₘᵢₙ ≤ 25.902) and Df/ Hdoₘᵢₙ is 1.143 to 4.000 (i.e., 1.143 ≤ Df/ Hdoₘᵢₙ ≤ 4.000). Further, the area can be defined between lines 2704, 2706 that are defined by Expressions (3) and (4) as follows: $\left(\frac{Df}{{Hdo}_{min}}\right) = 0.393 ∗ \left(\frac{Wdo}{{Hdo}_{min}}\right) - 0.068$ (3) $\left(\frac{Df}{{Hdo}_{min}}\right) = 0.19 ∗ \left(\frac{Wdo}{{Hdo}_{min}}\right) - 1.225$ (4)

Such benefits include reduced stress concentrations along the sides of the impingement and diffuser portions and the diffuser outlet, increased conductive cooling through the wall of the airfoil, more even flow distribution from the diffuser outlet, and improved cooling film performance, all of which help to reduce thermal stresses in the wall of the airfoil. This provides for increased durability of the blade assembly 100, which increases the lifetime of the blade assembly 100 and extends the time between a need for replacement parts (which reduces required maintenance and costs) as well as increases overall engine reliability.

Table 3 below illustrates minimum and maximum values for the diffuser outlet width (Wdo), the minimum diffuser outlet height (Hdoₘᵢₙ), the flare diameter (Df), along with minimum and maximum values for Expressions (1) and (2) suited for a turbine blade assembly that meets the durability requirements.

**TABLE 3**

| **Parameter** | | **Units:** | **Minimum** | **Maximum** |
|---|---|---|---|---|
| diffuser outlet width | Wdo | millimeters (mm) | 1.270 | 7.620 |
| minimum diffuser outlet height | Hdoₘᵢₙ | millimeters (mm) | 0.127 | 1.270 |
| flare diameter | Df | millimeters (mm) | 0.508 | 1.524 |
| Expression (1) | Wdo/ Hdoₘᵢₙ | unitless | 3.972 | 25.902 |
| Expression (2) | Df/ Hdoₘᵢₙ | unitless | 1.143 | 4.000 |

The values defining the cooling aperture 140 within the ranges of Table 3 provide for reduced stress concentrations, and greater cooling film effectiveness and larger coverage area, as compared to designs outside of such ranges. Therefore, such a cooling aperture 140 within the ranges of Table 3 provides for increased component durability, lifetime, and reduced maintenance as compared with designs outside of the ranges.

Benefits include an improvement in local heat transfer and cooling of the airfoil 104, as well as providing an effective cooling film over a relatively larger area of the airfoil 104 as compared to that of traditional cooling apertures having geometries with values outside of the Expressions (1) and (2) disclosed above. Such improvements increase overall component and engine efficiency, requiring a lesser total cooling flow volume to cool a region of the airfoil 104 including the cooling aperture 140. This provides for increased durability for the airfoil 104, which decreases required maintenance and costs, while increasing overall engine reliability.

Further still, the benefits included herein provide for an airfoil 104 with the cooling aperture 140 that fits within existing engines. For example, the values Expressions (1) and (2) as provided herein take existing engines into consideration, permitting replacement of current blade assemblies with replacement blade assemblies (or new blade assemblies) having the parameters of the cooling aperture 140 described herein. Such consideration provides for replacing and improving current engine systems. This provides for improving current engine durability without increasing costs to prepare new engines or further adapt existing engines.

The aforementioned relationships determined by the inventors are expressed in terms the Expressions (1) and (2). The ranges associated with the Expressions (1) and (2) identified an improved airfoil 104 design with an improved cooling aperture 140 design, better suited for a particular engine operating environment and taking into account the constraints imposed on blade assembly design with the cooling aperture 140 used in such a system.

The example cooling apertures disclosed herein are described in connection with an airfoil of a turbine blade assembly. However, any of the example cooling apertures disclosed herein can be similarly implemented in connection with other parts of a turbine blade assembly, such as on an interior wall or rib, a tip wall, on a platform of a turbine blade assembly. For instance, the platform may have one or more internal cooling cavities that receive cooling fluid, and one or more cooling apertures can be provided on the upper or lower surface of the platform to exhaust the cooling fluid to the exterior surface of the platform. Further, any of the example cooling apertures disclosed herein can be implemented on other types of components of a gas turbine engine that require or utilize cooling architecture, such as a fan blade (e.g., fan blade 42 of FIG. 1), a compressor blade (e.g., compressor blade 56, 58 of FIG. 1), a stationary vane (e.g., vane 60, 62, 72, 74 of FIG. 1), a strut, a shroud, a service tube, or a combustion liner wall.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

A turbine blade assembly for a turbine engine, the turbine blade assembly comprising: an airfoil having an outer wall defining an interior of the airfoil and including an exterior surface; a cooling circuit in the interior; and a cooling aperture in the outer wall and fluidly coupled to the cooling circuit, the cooling aperture including: an impingement portion; a diffusion portion extending from the impingement portion and exhausting at a diffuser outlet at the exterior surface, wherein the diffuser outlet includes an upstream edge and a downstream edge, wherein a diffuser outlet height is defined as a distance between the upstream edge and the downstream edge within an intermediate region; a first side, a second side spaced from the first side, an outer surface extending between the first side and the second side, and an inner surface spaced from the outer surface and extending the first side and the second side, wherein the first side, the second side, the outer surface, and the inner surface at least partially define the impingement portion and the diffusion portion, wherein a diffuser outlet width is defined as a distance between the first side and the second side at the diffuser outlet; and a flared portion on the first side at the diffuser outlet.

The turbine blade assembly any preceding clause, wherein the diffuser outlet width (Wdo) is 1.270 to 7.620 millimeters (mm), wherein a minimum diffuser outlet height (Hdoₘᵢₙ) is the minimum diffuser outlet height of the diffuser outlet along the intermediate region, wherein the minimum diffuser outlet height (Hdoₘᵢₙ) is 0.127 to 1.270 mm, wherein a flare diameter is a diameter for a circle-shape partially defining the flared portion at the diffuser outlet, wherein the maximum flare diameter (Dfₘₐₓ) is 0.508 to 1.524 millimeters (mm), and wherein: $3.972 \leq \left(\frac{Wdo}{{Hdo}_{min}}\right) \leq 25.902 ,$ and $1.143 \leq \left(\frac{Df}{{Hdo}_{min}}\right) \leq 4.000 .$

The turbine blade assembly of any preceding clause, wherein $\left(\frac{Df}{{Hdo}_{min}}\right) = 0.393 ∗ \left(\frac{Wdo}{{Hdo}_{min}}\right) - 0.068 ,$ and $\left(\frac{Df}{{Hdo}_{min}}\right) = 0.19 ∗ \left(\frac{Wdo}{{Hdo}_{min}}\right) - 1.225 .$

The turbine blade assembly of any preceding clause, wherein a ratio of the diffuser outlet width to the diffuser outlet height is greater than 2.

The turbine blade assembly of any preceding clause, further comprising a metering hole coupling the cooling circuit to the cooling aperture and defining a hydraulic diameter.

The turbine blade assembly of any preceding clause, wherein a ratio of the diffuser outlet width to the hydraulic diameter is greater than 3.

The turbine blade assembly of any preceding clause, wherein a ratio of the diffuser outlet height to the hydraulic diameter is less than 3.

The turbine blade assembly of any preceding clause, wherein the flared portion includes a flare height defined in a direction extending between the outer surface and the inner surface; and wherein a ratio of the flare height to the diffuser outlet height for the cooling aperture is greater than 0.75.

The turbine blade assembly of any preceding clause, wherein an aperture height is defined as a distance between the outer surface and the inner surface, and wherein a ratio of the flare height to the aperture height is greater than 1.5.

The turbine blade assembly of any preceding clause, wherein the flared portion is provided at both of the first side and the second side at the diffuser outlet.

The turbine blade assembly of any preceding clause, wherein the flared portion is defined in at least one of the outer surface or the inner surface.

The turbine blade assembly of any preceding clause, wherein the flared portion is defined in both the outer surface and the inner surface.

The turbine blade assembly of any preceding clause, wherein the intermediate region defines an aperture height between the outer surface and the inner surface that is less than a flare height for the flared portion defined between the outer surface and the inner surface.

The turbine blade assembly of any preceding clause, wherein the flared portion at the first side extends into the diffusion portion from the diffuser outlet.

The turbine blade assembly of any preceding clause, wherein the impingement portion is positioned at an angle relative to the diffusion portion, and wherein the angle is greater than 1 degree (1°) and less than 180 degrees (180°).

The turbine blade assembly of any preceding clause, wherein the angle is less than 90 degrees (90°) and the diffusion portion at least partially overlays the impingement portion.

The turbine blade assembly of any preceding clause, wherein the impingement portion and the diffusion portion include an increasing cross-sectional area in a direction extending toward the diffuser outlet.

The turbine blade assembly of any preceding clause, wherein the cooling aperture has a set of turbulators formed within the flared portion.

A gas turbine engine comprising: a compressor section, a combustion section, and a turbine section, the turbine section including the turbine blade assembly of any preceding clause.

An airfoil for a turbine engine, the airfoil comprising: an outer wall defining an interior and including an exterior surface; a cooling circuit positioned within the interior; and a cooling aperture positioned in the outer wall and fluidly coupled to the cooling circuit, the cooling aperture comprising: an impingement portion; a diffusion portion extending from the impingement portion and exhausting at a diffuser outlet defining a diffuser outlet height and a diffuser outlet width; a first side partially defining the impingement portion and the diffusion portion; and a flared portion provided the first side at the diffuser outlet.

The airfoil of any preceding clause, wherein a ratio of the diffuser outlet width to the diffuser outlet height is greater than 2.

The airfoil of any preceding clause, wherein the diffuser outlet includes an upstream edge and a downstream edge, and wherein the diffuser outlet height is defined as a distance between the upstream edge and the downstream edge.

The airfoil of any preceding clause, wherein the cooling aperture further comprises a second side spaced from the second side and partially defining the impingement portion and the diffusion portion, and wherein the diffuser outlet width is defined as a distance between the first side and the second side at the diffuser outlet.

The airfoil of any preceding clause, further comprising a metering hole coupling the cooling circuit to the cooling aperture and defining a hydraulic diameter.

The airfoil of any preceding clause, wherein a ratio of the diffuser outlet width to the hydraulic diameter is greater than 3.

The airfoil of any preceding clause, wherein a ratio of the diffuser outlet height to the hydraulic diameter is less than 3.

The airfoil of any preceding clause, wherein the flared portion defines a flare width; and wherein the flare width is at least 1.2 times the diffuser outlet height.

The airfoil of any preceding clause, wherein the cooling aperture is further defined between an upper surface and a lower surface; wherein the flared portion includes a flare height defined in a direction extending between the upper surface and the lower surface; and wherein a ratio of the flare height to the diffuser outlet height for the cooling aperture is greater than 0.75.

The airfoil of any preceding clause, wherein an aperture height is defined as a distance between the upper surface and the lower surface, and wherein a ratio of the aperture height to the flare height is greater than 3.

The airfoil of any preceding clause, wherein the cooing aperture further comprises a second side spaced from the first side, and wherein the flared portion is provided at both of the first side and the second side at the diffuser outlet.

The airfoil of any preceding clause, wherein the cooling aperture further comprises an upper surface spaced from a lower surface, and wherein the flared portion is defined in at least one of the upper surface or the lower surface.

The airfoil of any preceding clause, wherein the flared portion is defined in both the upper surface and the lower surface.

The airfoil of any preceding clause, wherein the cooling aperture further defines an intermediate region adjacent the flared portion.

The airfoil of any preceding clause, wherein the intermediate region defines an aperture height between the upper surface and the lower surface that is less than a flare height for the flared portion defined between the upper surface and the lower surface.

The airfoil of any preceding clause, wherein the flared portion at the first side extends into the diffusion portion from the diffuser outlet.

The airfoil of any preceding clause, wherein the impingement portion is positioned at an angle relative to the diffusion portion, and wherein the angle is greater than 1 degree (1°) and less than 180 degrees (180°).

The airfoil of any preceding clause, wherein the angle is less than 90 degrees (90°) and the diffusion portion at least partially overlays the impingement portion.

The airfoil of any preceding clause, wherein the impingement portion and the diffusion portion include an increasing cross-sectional area in a direction extending toward the diffuser outlet.

A component for a turbine engine, the component comprising: a substrate defining an interior and including an exterior surface; a cooling aperture positioned in the substrate and fluidly coupled to the interior, the cooling aperture comprising: an impingement portion; a diffusion portion extending from the impingement portion and exhausting at a diffuser outlet; a first side spaced from a second side, with both the first side and the second side partially defining the impingement portion and the diffusion portion; and a flared portion positioned on at least one of the first side or the second side.

## Claims

1. A turbine blade assembly (100) for a turbine engine (10), the turbine blade assembly (100) comprising:
an airfoil (104) having an outer wall (118) defining an interior (130) of the airfoil and including an exterior surface (134);
a cooling circuit (132) in the interior (130); and
a cooling aperture (150) in the outer wall (118) and fluidly coupled to the cooling circuit (132), the cooling aperture (150) including:
an impingement portion (152);
a diffusion portion(154) extending from the impingement portion (152) and exhausting at a diffuser outlet (156) at the exterior surface (134), wherein the diffuser outlet (156) includes an upstream edge (174) and a downstream edge (176), wherein a diffuser outlet height (Hdo) is defined as a distance between the upstream edge (174) and the downstream edge (176) within an intermediate region (172);
a first side (164), a second side (166) spaced from the first side (164), an outer surface (160) extending between the first side (164) and the second side (166), and an inner surface (162) spaced from the outer surface (160) and extending the first side (164) and the second side (166), wherein the first side (164), the second side (166), the outer surface (160), and the inner surface (162) at least partially define the impingement portion (152) and the diffusion portion (154), wherein a diffuser outlet width (Wdo) is defined as a distance between the first side (164) and the second side (166) at the diffuser outlet (156); and
a flared portion (170) on the first side (164) at the diffuser outlet (156).

2. The turbine blade assembly (100) of claim 1,
wherein the diffuser outlet width (Wdo) is 1.270 to 7.620 millimeters (mm),
wherein a minimum diffuser outlet height (Hdoₘᵢₙ) is the minimum diffuser outlet height of the diffuser outlet (156) along the intermediate region (172), wherein the minimum diffuser outlet height (Hdoₘᵢₙ) is 0.127 to 1.270 mm,
wherein a flare diameter is a diameter for a circle-shape partially defining the flared portion (170) at the diffuser outlet (156), wherein the maximum flare diameter (Dfₘₐₓ) is 0.508 to 1.524 millimeters (mm), and
wherein: $3.972 \leq \left(\frac{Wdo}{{Hdo}_{min}}\right) \leq 25.902 ,$ and $1.143 \leq \left(\frac{Df}{{Hdo}_{min}}\right) \leq 4.000 .$

3. The turbine blade assembly (100) of claim 2, wherein $\left(\frac{Df}{{Hdo}_{min}}\right) = 0.393 ∗ \left(\frac{Wdo}{{Hdo}_{min}}\right) - 0.068 ,$ and $\left(\frac{Df}{{Hdo}_{min}}\right) = 0.19 ∗ \left(\frac{Wdo}{{Hdo}_{min}}\right) - 1.225 .$

4. The turbine blade assembly (100) of any preceding claim, wherein a ratio of the diffuser outlet width (Wdo) to the diffuser outlet height (Hdo) is greater than 2.

5. The turbine blade assembly (100) of any preceding claim, further comprising a metering hole (158) coupling the cooling circuit (132) to the cooling aperture (150) and defining a hydraulic diameter.

6. The turbine blade assembly (100) of claim 5, wherein a ratio of the diffuser outlet width (Wdo) to the hydraulic diameter (dₕ) is greater than 3.

7. The turbine blade assembly (100) of claim 6, wherein a ratio of the diffuser outlet height (Hdo) to the hydraulic diameter (dₕ) is less than 3.

8. The turbine blade assembly (100) of any preceding claim,
wherein the flared portion (170) includes a flare height (Hf) defined in a direction extending between the outer surface (160) and the inner surface (162); and
wherein a ratio of the flare height (Hf) to the diffuser outlet height (Hdo) for the cooling aperture (150) is greater than 0.75.

9. The turbine blade assembly (100) of claim 8, wherein an aperture height (Ha) is defined as a distance between the outer surface (160) and the inner surface (162), and wherein a ratio of the flare height (Hf) to the aperture height (Ha) is greater than 1.5.

10. The turbine blade assembly (100) of any preceding claim, wherein the flared portion (170) is provided at both of the first side (164) and the second side (166) at the diffuser outlet (156).

11. The turbine blade assembly (100) of any preceding claim, wherein the flared portion (170) is defined in at least one of the outer surface (160) or the inner surface (162).

12. The turbine blade assembly (100) of claim 11, wherein the flared portion (170) is defined in both the outer surface (160) and the inner surface (162).

13. The turbine blade assembly (100) of claim 12, wherein the intermediate region (172) defines an aperture height (Ha) between the outer surface (160) and the inner surface (162) that is less than a flare height (Hf) for the flared portion (170) defined between the outer surface (160) and the inner surface (162).

14. The turbine blade assembly (100) of any preceding claim, wherein the impingement portion (152) is positioned at an angle relative to the diffusion portion (154), and wherein the angle is greater than 1 degree (1°) and less than 180 degrees (180°).

15. The turbine blade assembly (100) of claim 14, wherein the angle is less than 90 degrees (90°) and the diffusion portion (154) at least partially overlays the impingement portion (152).
